Europäisches Patentamt

European Patent Office

Office européen des brevets

(19)

(11) **EP 1 209 600 A1**

(12) **EUROPEAN PATENT APPLICATION**

(43) Date of publication:
    **29.05.2002 Bulletin 2002/22**

(51) Int Cl.⁷: **G06F 17/60**

(21) Application number: **01306216.1**

(22) Date of filing: **19.07.2001**

(84) Designated Contracting States:
    **AT BE CH CY DE DK ES FI FR GB GR IE IT LI LU
    MC NL PT SE TR**
    Designated Extension States:
    **AL LT LV MK RO SI**

(30) Priority: **21.11.2000 JP 2000354572**

(71) Applicant: **FUJITSU LIMITED
    Kawasaki-shi, Kanagawa 211-8588 (JP)**

(72) Inventor: **Sakurai, Hiroshi
    Nakahara-ku, Kawasaki-shi, Kanagawa 211 (JP)**

(74) Representative: **Stebbing, Timothy Charles et al
    Haseltine Lake & Co.,
    Imperial House,
    15-19 Kingsway
    London WC2B 6UD (GB)**

(54) **Advertisement distribution method and an advertisement distribution apparatus**

(57)     An advertisement broker collects advertisements from advertisers who wish to advertise goods or services using a communications network such as the Internet, selects advertisements matching consumer (user) needs from among a multiplicity of collected advertisements, and distributes (S16) the advertisements to the users through the network. A user who purchases goods and services on the basis of the distributed advertisements responds (S24) to the advertisement broker with a questionnaire including evaluations, feelings, and opinions relating to the goods and services provided by the advertiser, as well as relating to the advertiser itself. The response rate of users to the questionnaire is improved by paying a prescribed reward amount to users who respond to the questionnaire at this time. Also, the advertisement broker improves the effectiveness of the advertisements provided on the basis of the results of that questionnaire, and, in addition, provides the advertiser with results of the questionnaire. At this time, the advertisement broker receives a prescribed reward amount from the advertisers provided with the questionnaire results.

FIG. 5

EP 1 209 600 A1

**Description**

The present invention relates to an advertisement distribution method and advertisement distribution apparatus using a computer network such as the Internet, for providing users with information in the form of advertisements.

Conventionally, advertising to large numbers of unspecified consumers has been carried out by methods such as a newspaper inserts, television and radio commercials, or advertising boards. Also, advertising to specific consumers has been carried out with direct mail or the like. In recent years, banner advertisements on home pages have been used as an effective publicizing means on the rapidly growing Internet.

In this way, consumers are exposed to an excess of advertisements on a daily basis and have to extract necessary information from vast quantities of advertisements.

However, an advertisement that is required by a particular consumer may not always be supplied at the necessary time. Also, it is not easy to select necessary information from a large quantity of advertisements and it is difficult to judge the effectiveness of advertisements.

Consequently, it is desirable to provide an advertisement distribution method and advertisement distribution system with which necessary advertisements can be supplied to consumers quickly.

Also, it is desirable to provide an advertisement distribution method and advertisement distribution apparatus with which it is possible to supply highly effective advertisements to consumers.

A summary of the present invention is as follows.

An advertisement broker collects advertisements from advertisers who wish to advertise goods or services using a communications network such as the Internet, selects advertisements matching consumer (user) needs from among a multiplicity of collected advertisements, and distributes the advertisements to the users through the network. A user who purchases goods and services on the basis of the distributed advertisements responds to the advertisement broker with a questionnaire including evaluations, feelings, and opinions relating to the goods and services provided by the advertiser, as well as relating to the advertiser itself. The response rate of users to the questionnaire is improved by paying a prescribed reward amount to users who respond to the questionnaire at this time. Also, the advertisement broker improves the effectiveness of the advertisements provided on the basis of the results of that questionnaire, and, in addition, provides the advertiser with results of the questionnaire. At this time, the advertisement broker receives a prescribed reward amount from the advertisers provided with the questionnaire results.

By using this type of advertisement broker, the user can receive required and highly effective advertisements at the necessary time. Meanwhile, rather than advertising to a broad and unspecified market, the advertiser can narrowly focus the advertisements and advertise effectively. The advertiser can also easily acquire user reactions in the form of questionnaire results and stimulate the publicity strategy for the goods and services they provide.

Reference will now be made, by way of example only, to the accompanying drawings in which:-

Figure 1 is a drawing of the constitution of the advertisement distribution system relating to an embodiment of the present invention;
Figure 2 is a drawing showing an example of the constitution of the server 3;
Figure 3 shows an example of the constitution of the user database 32;
Figure 4 shows an example of the constitution of the advertiser database 33;
Figure 5 is a flowchart of the processing between the user terminal 1 and server 3 in an embodiment of the present invention;
Figure 6 is a flowchart of the processing between the advertiser terminal 2 and server 3 in the embodiment;
Figure 7 is an example of a menu screen;
Figure 8 is an example of an advertiser registration screen;
Figure 9 is an example of a user registration screen;
Figure 10 is an example of an authentication screen;
Figure 11 is an example of a registration details confirmation screen;
Figure 12 is an example of a search results display screen;
Figure 13 is an example of a search results display screen;
Figure 14 is an example of a search results display screen;
Figure 15 is an example of a registration details confirmation screen;
Figure 16 is an example of a search results display screen;
Figure 17 is an example of a search results display screen;
Figure 18 is an example of a search results display screen;
Figure 19 is an example of a pre-purchase questionnaire input guide screen;
Figure 20 is an example of a screen for selecting goods and services which are the subject of a questionnaire;
Figure 21 is an example of a goods and services selection screen;
Figure 22 is an example of a pre-purchase questionnaire input screen;

Figure 23 is an example of a screen for selecting goods and services which are the subject of the pre-purchase questionnaire;

Figure 24 is an example of a goods and services selection screen;

Figure 25 is an example of a pre-purchase questionnaire input screen;

Figure 26 is an example of a post-purchase questionnaire input guide screen;

Figure 27 is an example of a screen for selecting goods and services which are the subject of the questionnaire;

Figure 28 is an example of a goods and services selection screen;

Figure 29 is an example of a post-purchase questionnaire input screen;

Figure 30 is an example of a post-purchase questionnaire input screen;

Figure 31 is an example of a post-purchase questionnaire input screen;

Figure 32 is an example of a screen for selecting goods which are the subject of the questionnaire;

Figure 33 is an example of a screen for selecting goods which are the subject of the questionnaire;

Figure 34 is an example of a post-purchase questionnaire input screen;

Figure 35 is an example of a post-purchase questionnaire input screen;

Figure 36 is an example of a post-purchase questionnaire input screen;

Figure 37 is an example of a screen for selecting provided information;

Figure 38 is an example of a screen for selecting user classification;

Figure 39 is an example of the screen of advertiser image information before and after purchasing;

Figure 40 is an example of a breakdown display screen in Figure 39;

Figure 41 is an example of a screen of goods and services image information before and after purchasing;

Figure 42 is an example of a screen of user complaints and related information;

Figure 43 is a flowchart of question processing in the server 3;

Figure 44 is an example of a question input screen;

Figure 45 is an example of a question response screen; and

Figure 46 is an example of a question response display screen.

An embodiment of the present invention is explained hereinbelow. However, the technical scope of the present invention is not limited to this embodiment.

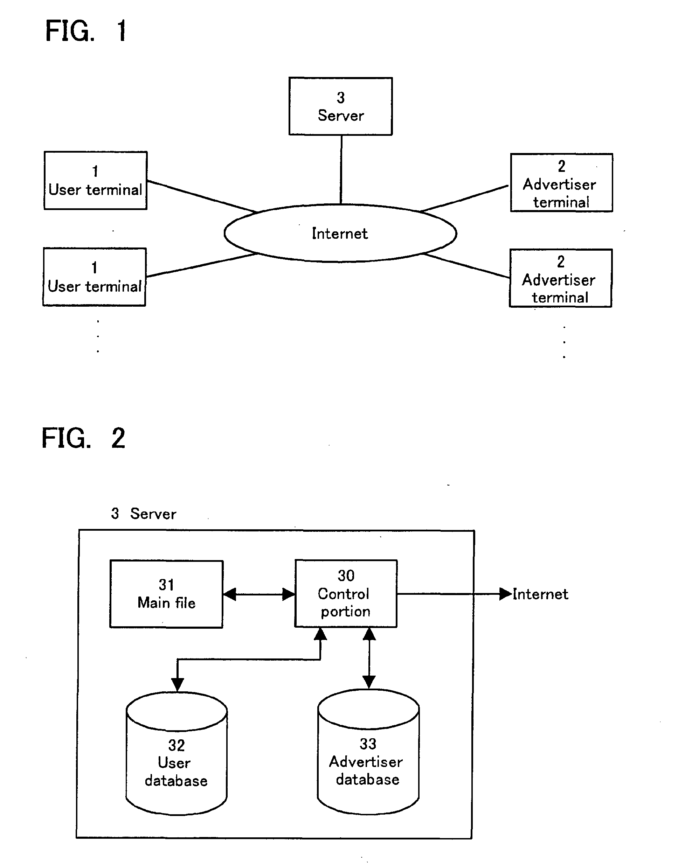

Figure 1 shows the constitution of the advertisement distribution system relating to an embodiment of the present invention. In Figure 1, the user terminal 1 and advertiser terminal 2 connect to the server (advertisement distribution apparatus) 3 of an advertisement broker through a network such as the Internet, in the present embodiment. The user and advertiser terminals 1 and 2 may be personal computers or mobile telephones, for example, and are devices that connect to a network and can communicate with the server 3. The terminals 1 and 2 are provided with an input device such as a keyboard or mouse and a display unit such as a liquid crystal display or cathode ray tube.

Figure 2 is a drawing showing an example of the constitution of the server 3. In Figure 2, the server 3 includes a control unit 30 constituted from a CPU, or the like. By executing a main program included in the main file 31, the control unit 30 provides the advertisement broker site (home page) on the Internet and executes processing between the user terminal 1 and the advertiser terminal 2 through this site, as described in detail hereinbelow. The main program includes a search program, sort program, database updating program, and communications program, and so forth, for example; furthermore, the main file includes HTML files, or the like, corresponding to the home page screen that is displayed on the terminals 1 and 2. Furthermore, the server 3 includes a user database 32 and advertiser database 33.

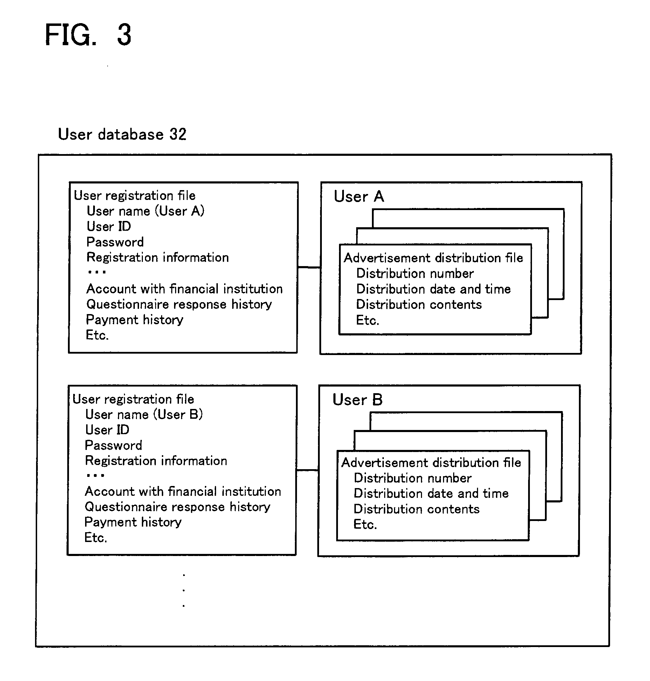

Figure 3 shows an example of the constitution of the user database 32. As shown in the drawing, the user database 32 includes user registration files containing the user name, user ID, registration information, and assorted history information, and so forth, for each user; the user database also includes advertisement files containing information relating to the advertisements distributed to each user.

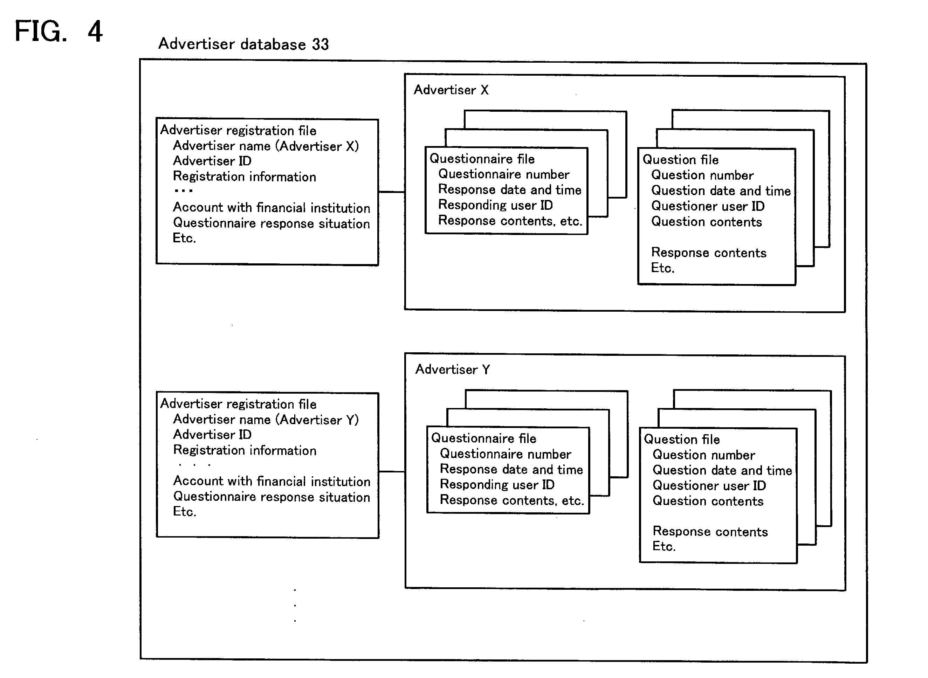

Figure 4 shows an example of the constitution of the advertiser database 33. As shown in the drawing, the advertiser database 33 includes an advertiser registration file containing the advertiser name, advertiser ID, registration information, and history information for each advertiser. The advertiser database also includes a questionnaire file containing the results of questionnaire responses from users for each advertiser, and question files containing questions from users and the responses thereto.

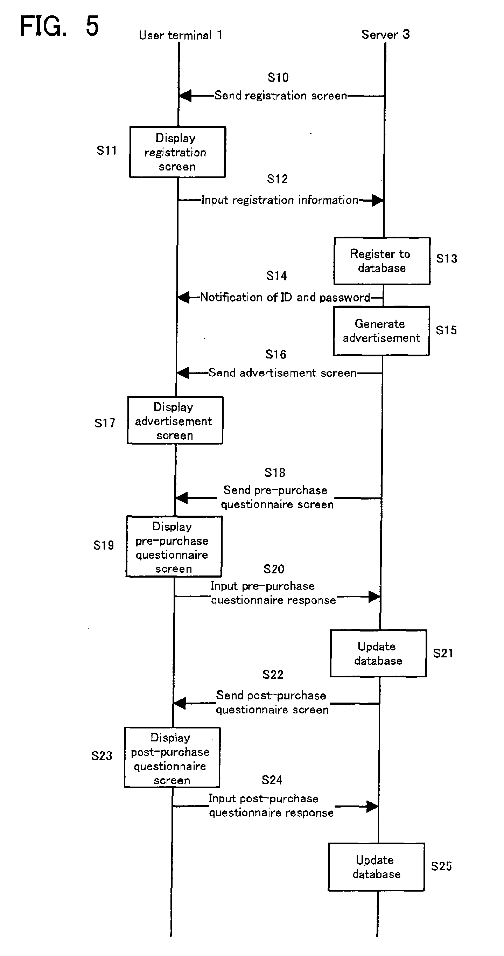

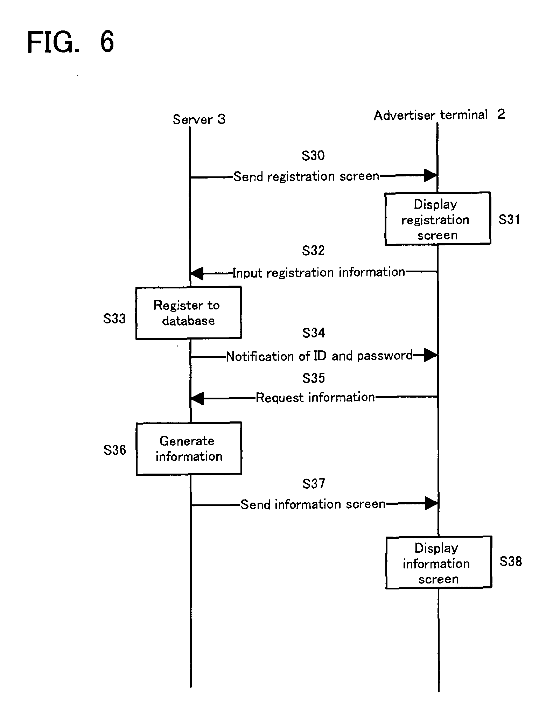

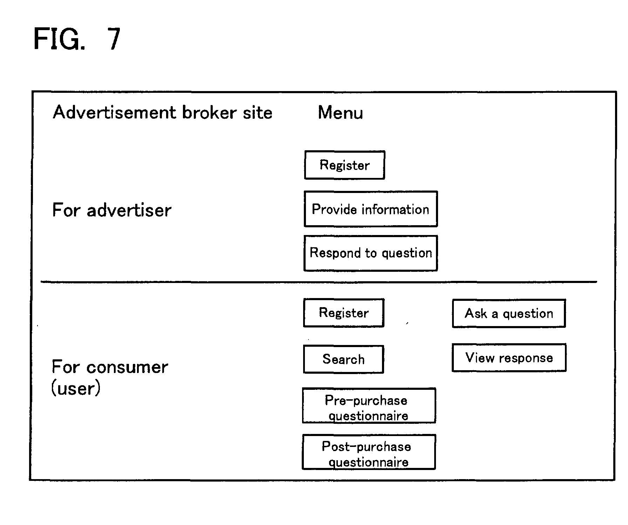

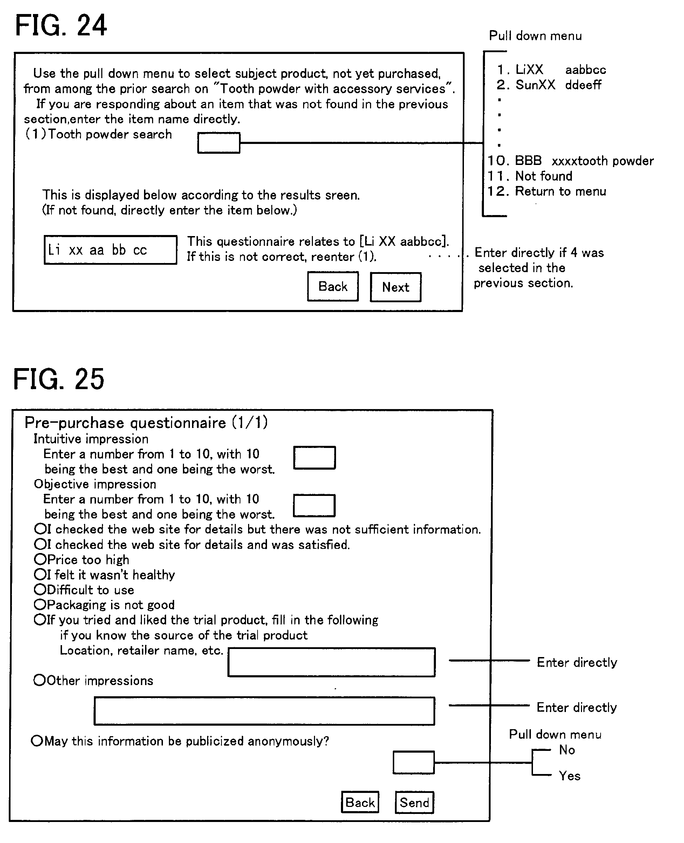

The processing between the user terminal 1 and advertiser terminal 2, and the server 3 is explained hereinbelow. Figure 5 is a flowchart of the processing between the user terminal 1 and server 3 relating to the embodiment of the present invention; and Figure 6 is a flowchart of the processing between the advertiser terminal 2 and server 3 relating to the present embodiment. Also, Figures 7 through 42 are examples of screens displayed on the user terminal 1 or advertiser terminal 2 as the processing between the user terminal 1 and advertiser terminal 2, and server 3 takes place. Figures 5 and 6 are explained referring to Figures 7 through 42.

[User and advertiser registration]

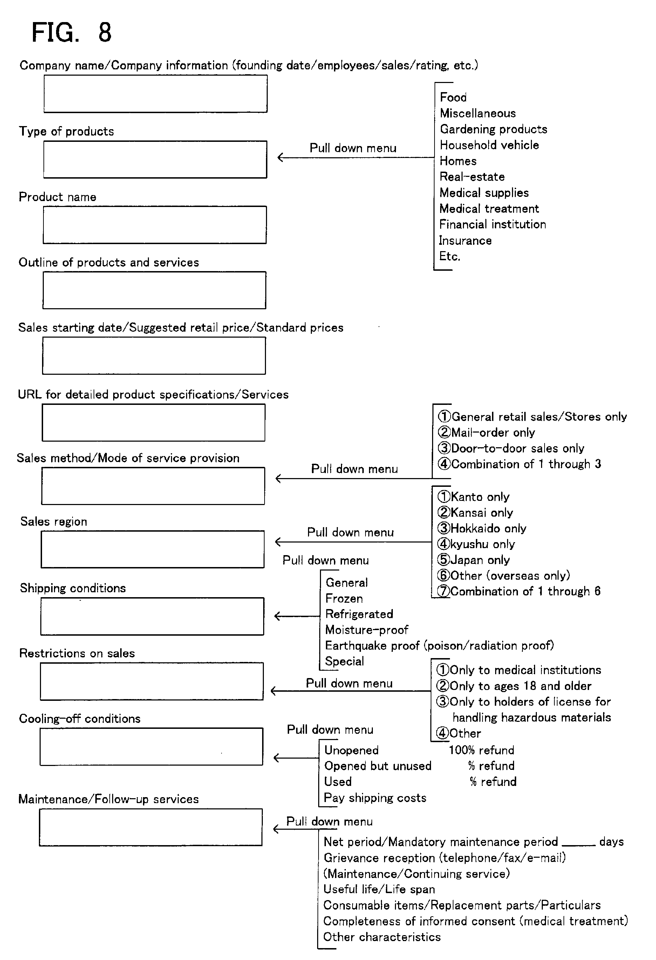

Users and advertisers need to register with the advertisement broker. In Figure 6, first, a person wishing to register as an advertiser (this person is not yet registered as an advertiser, but is referred to as "advertiser" in the explanation) accesses the server 3 and carries out the process for registering prescribed advertiser information on the server 3. Specifically, the advertiser connects the advertiser terminal 2 to the server 3 and first causes the menu screen shown in Figure 7 to be displayed. The advertiser then selects "register" under the heading "Advertiser" on the menu screen using a mouse. Accordingly, the server 3 sends the advertiser registration screen shown in Figure 8 to the terminal 2 (S30) and the advertiser registration screen is displayed on the terminal 2 (S31).

Following the advertiser registration screen in Figure 8, the advertiser inputs the requested information by operating a keyboard or mouse, or the like. The advertiser inputs information in the input boxes provided for each item. Also, for specific items such as the type of goods or services, the advertiser selects a prescribed option from a pull-down menu. As shown in the drawing, a large amount of detailed information such as various conditions is registered.

When the inputted information is sent from the advertiser terminal 2 to the server 3 (S32), the server 3 registers the sent information as an advertiser registration file in the advertiser database 33 (S33), in addition to generating authentication information such as an advertiser ID and password for distinguishing the advertiser and notifying the advertiser by sending this information in the form of an electronic mail or the like (S34).

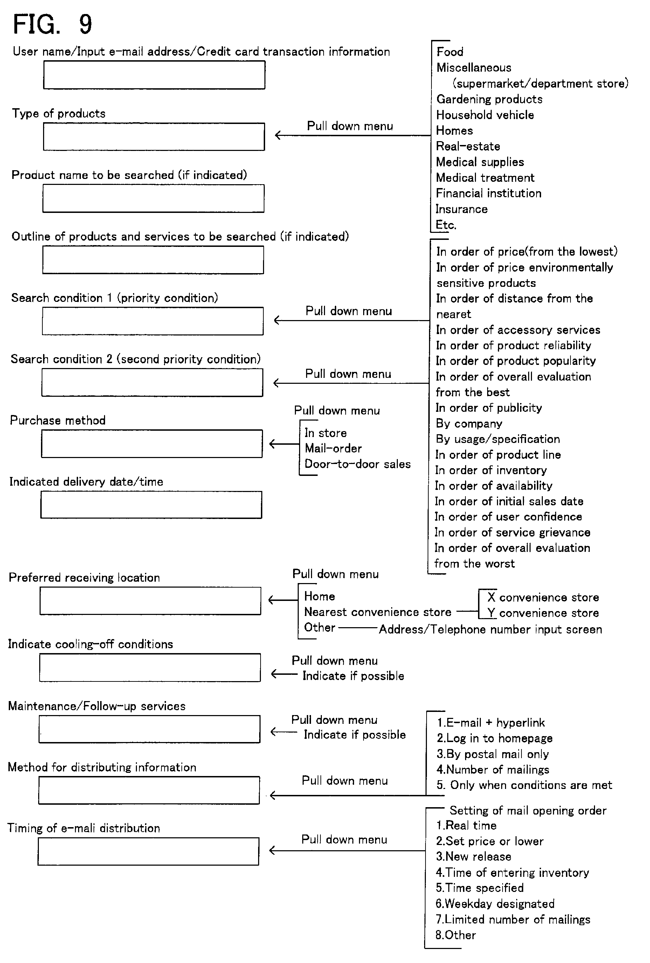

Meanwhile, users carry out processing to register prescribed user information on the server 3 in the same way as advertisers. In Figure 5, a user connects the terminal 1 to the server 3 and selects "registration" under the heading "Consumer" in the menu screen in Figure 7 with a mouse or the like. The server 3 thus sends the user registration screen to the terminal 1 (S10) and the user registration screen is displayed on the terminal 1 (S11). Following the user registration screen in Figure 9, the user inputs the requested information by operating a keyboard or mouse, or the like. A large amount of detailed information such as various conditions is also registered for the user.

When the inputted information is sent from the user terminal 1 to the server 3 (S12), the server 3 registers the sent information as a user registration file in the user database 32 (S13), in addition to generating authentication information such as a user ID or password, or the like, for distinguishing the user and notifying the user by sending this information in the form of an electronic mail or the like (S14).

[Advertisement distribution]

In Figure 5, the server 3 distributes advertising information matching the registered conditions to users who have completed user registration (S16) and the advertisement screen is displayed on the user terminal 1 (S17). Distribution may be carried out by electronic mail to the user terminal 1 or by providing advertisements as the broker site home page screen. Here, the case of distribution as a home page screen is explained.

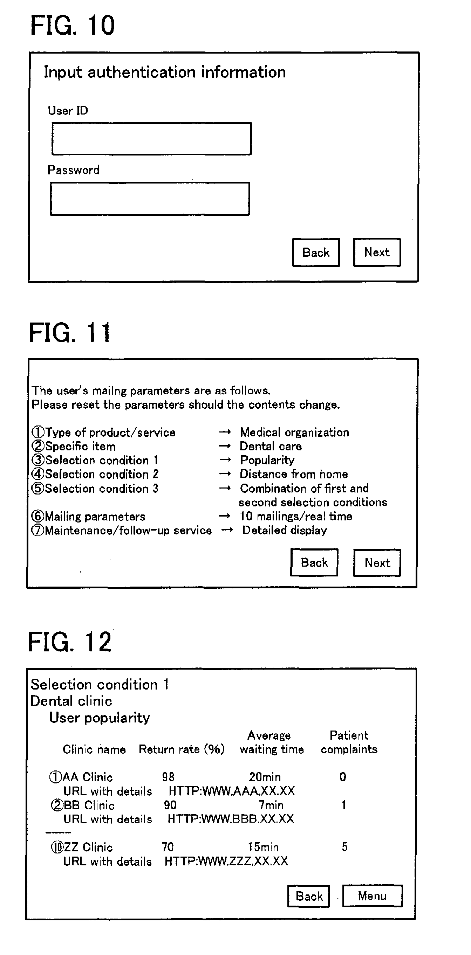

The user operates the terminal 1 and selects "search" under the heading "Consumer" on the menu screen in Figure 7. Thereupon, the login screen shown in Figure 10 is displayed on the terminal 1. The user inputs the user ID and password provided. The server 3 compares the inputted authentication information with the authentication information registered in the user database 32. If the authentication information is correct, then the confirmation screen for confirming the desired advertisements registered by the user (registration contents) is displayed on the terminal 1 as shown in Figure 11. Moreover, in Figure 11, the case is explained of distribution of an advertisement for a dental clinic, which is the service provider, as an example of distributing an advertisement relating to the provision of a service.

When a change to the registration contents is displayed on the screen in Figure 11, the user can use this screen and reset the registration contents. When there is no change, the user selects "Next" without making any changes. When "Next" is selected, the server 3 searches the advertiser database 33 according to the registration contents displayed in Figure 11 and extracts advertiser information that matches the registration contents. Here, the search conditions are, for example, (1) popularity, (2) distance from residence, and (3) a combination of (1) and (2) as shown in Figure 11. Moreover, advertiser information such as "popularity" that is not included in the registration information is collected using questionnaires from users as discussed hereinbelow and the questionnaire files in the advertiser database 33 are searched. Also, for "distance from residence", for example, the advertiser registration files in the advertiser database 33 are searched on the basis of the user's address or closest station and advertiser's address or closest station, using existing railway line search programs and mapping programs.

Figures 12 through 14 are examples of search results display screens corresponding to search conditions (1), (2), and (3), respectively, in Figure 11 above. In Figure 12, a prescribed number of highly popular dental clinics (for example, high rate of repeat visits and few complaints) are displayed in order from among dental clinics registered as advertisers. The number of dental clinics displayed is determined in advance. In addition to the name of the dental clinic and the level of popularity thereof (repeat visit rate, number of complaints, etc.), the home page address (URL) that links to the Internet site provided by that particular dental clinic is displayed on the screen. Consequently, the user can display the site provided by the advertiser on the screen of the terminal 1 by clicking on the section displaying the address with a mouse or the like.

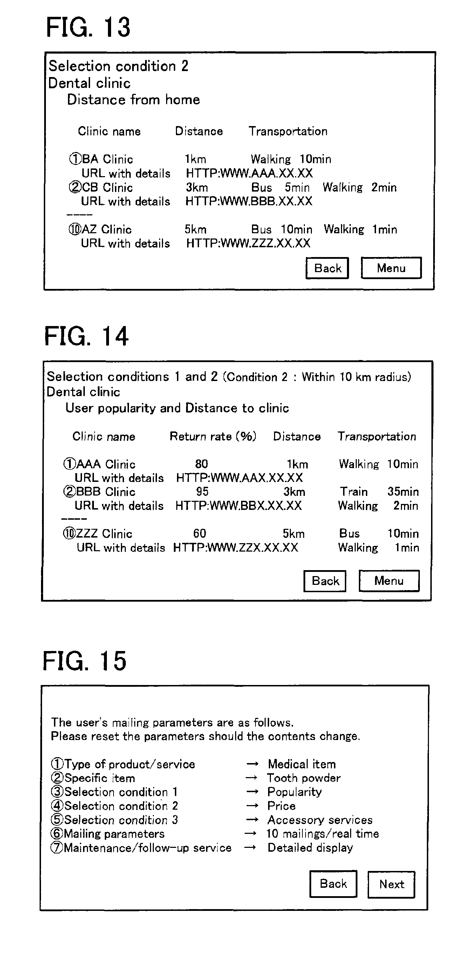

Also, in Figure 13, the dental clinics close to the residence of the user, who uses public transportation, are displayed in order. Furthermore, in Figure 14, dental clinics combining the two abovementioned distribution conditions (high popularity, close to residence) are displayed in order. In Figures 13 and 14, as in Figure 12, the home page addresses (URL) linking to the Internet sites provided by the service providers themselves are displayed. A user can therefore visit the Internet sites of the service providers (in this case, dental clinics) displayed and can acquire more detailed information therefrom relating to the service providers.

The distribution of an advertisement for "tooth powder" is explained as an example of distributing advertisements relating to the provision of commercial goods. Figure 15 is an example of a registration contents confirmation screen as in Figure 11. The search conditions in Figure 15 are, for example, (1) popularity, (2) price, and (3) additional services.

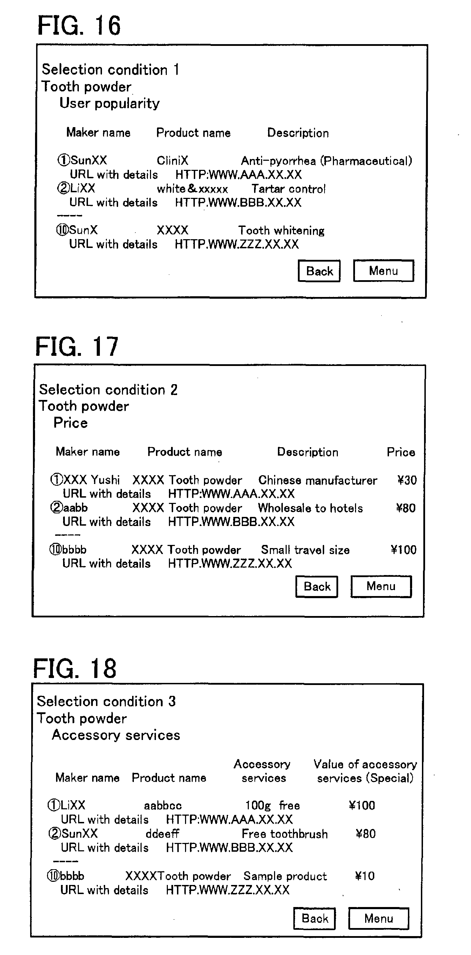

Figures 16 through 18 are examples of display screens for search results corresponding to the abovementioned search conditions (1), (2), and (3), respectively, in Figure 15. In Figure 16, the names and characteristics of a prescribed number of highly popular tooth powders are displayed in order from among tooth powders provided by advertisers. Product popularity is judged on the basis of the score for satisfaction in the user questionnaire discussed below, for example. Preferably, the scores from each user are averaged for each product and the higher the score, the more popular the product is judged to be. In Figure 17, the names and characteristics of tooth powders provided by advertisers are displayed in order from the lowest priced product. Furthermore, in Figure 18, the names and characteristics of tooth powders provided by advertisers are displayed in order from the higher valued additional services provided with the purchase of the tooth powder. Also, for each of the products displayed, the home page address (URL) of the Internet site managed by the manufacturer of the product provided (product provider) is displayed as discussed above. Consequently, by linking to that address, it becomes possible to easily acquire more detailed information relating to the product (tooth powder) and the product provider.

In this way, in the present embodiment, the advertisement broker collects advertisements from advertisers and registers advertiser information including information relating to the goods and services provided by the advertiser in the advertiser database 32 on the server 3. Meanwhile, the advertisement broker collects users wishing to receive advertisements and registers user information including search conditions for goods and services desired by the user in the user database 33 on the server 3. Then, the server 3 searches the advertiser database 32 according to those search conditions, extracts advertisements matching the search conditions, and supplies the advertisements extracted to the user terminal 1 through a network. The user can thereby easily and quickly acquire necessary advertisements.

[Implementing a pre-purchase questionnaire]

In Figure 5, after acquiring advertisements from the server 3, the user can complete a questionnaire for the advertisements acquired before purchasing advertised goods or before receiving advertised services. This questionnaire is called a pre-purchase questionnaire. The pre-purchase questionnaire has the purpose of enquiring about the image the user has regarding the product provider and the product, or the service provider, before the user purchases the advertised goods or before the user receives an advertised service. The image the user has is necessary information for the product provider or service provider to carry out publicity activities and is difficult to learn from a multiplicity of unspecified users. However, in the present embodiment, the image the user has and the effects of the publicity can be easily collected by prompting the users who received the advertisement to complete a pre-purchase questionnaire.

However, it is necessary to provide users with some incentive in order to prompt the users who received the advertisement to complete the pre-purchase questionnaire and to improve the response rate. In the present embodiment, a credit reward of a prescribed amount is paid to users who respond to the pre-purchase questionnaire. For example, the credit reward is transferred to a prescribed bank account that was registered during user registration. The credit reward is discussed in detail hereinbelow. Moreover, the credit reward may also be in the form of purchase discount points or a percentage discount, or the like.

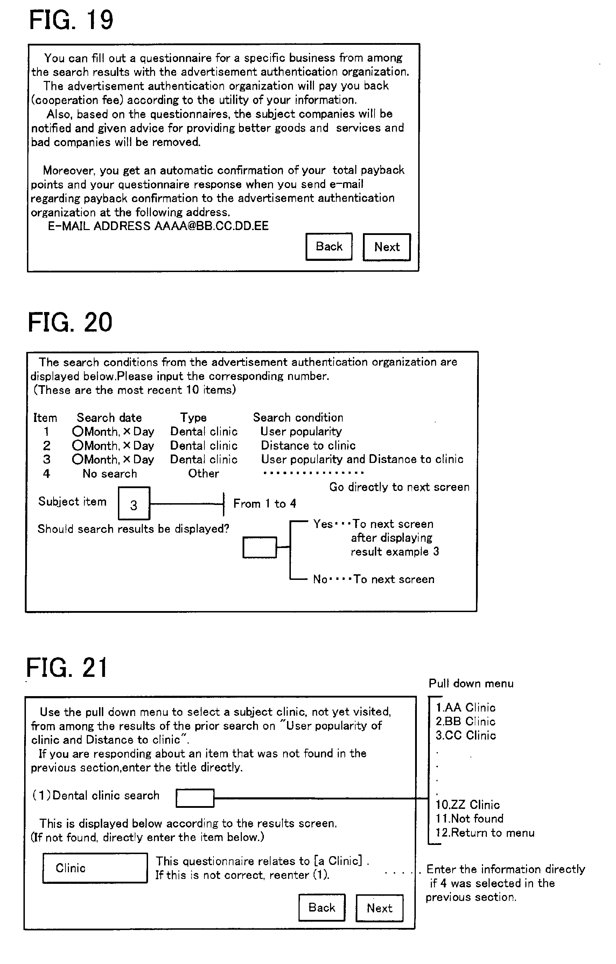

In order for the user to respond to the pre-purchase questionnaire, the user terminal 1 need to receive the pre-purchase questionnaire input screen from the server 3 (S18) and cause same to be displayed on the terminal 1 (S19) in Figure 5. Specifically, the user causes the menu screen in Figure 7 to be displayed on the user terminal 1 and selects "pre-purchase questionnaire" under the heading "Consumer" on the screen with an input device (clicks with a mouse). Thereupon, the server 3 sends the pre-purchase questionnaire input guide screen to the terminal 1 and the pre-purchase questionnaire input guide screen shown in Figure 19 is displayed on the terminal 1. The user selects the next screen, and the server 3 causes the screen for selecting products and services subject to the pre-purchase questionnaire to be displayed, as shown in Figure 20.

The server 3 stores the history information for the advertisements distributed to the user in the user database 32 as distributed advertisement files, extracts the distribution history for the user from the user database 32, and as shown in Figure 20, causes the information (distribution date and time, type of goods and services, search conditions, etc.) of the distributed advertisement to be displayed. Figure 20 shows the screen for the user who received advertisements for the dental clinic discussed above. From the screen in Figure 20, the user selects one advertisement and inputs the corresponding number. At this time, when the user wants to seethe selected advertisement again, the user selects the request to redisplay search results from the screen to have the contents of the selected advertisement displayed once more.

Meanwhile, when the user inputs the number corresponding to the advertisement, the list in the pull-down menu shown in Figure 21 is displayed in the order of the selected search conditions and the server 3 causes the screen for selecting goods and services appearing in the advertisement corresponding to the number selected from the list in the pull-down menu to be displayed. Moreover, it is also possible to input subject dental clinics directly for advertisements not included in the search results. The user selects the dental clinic (service provider) that is the subject of the response to the pre-purchase questionnaire from the pull-down menu.

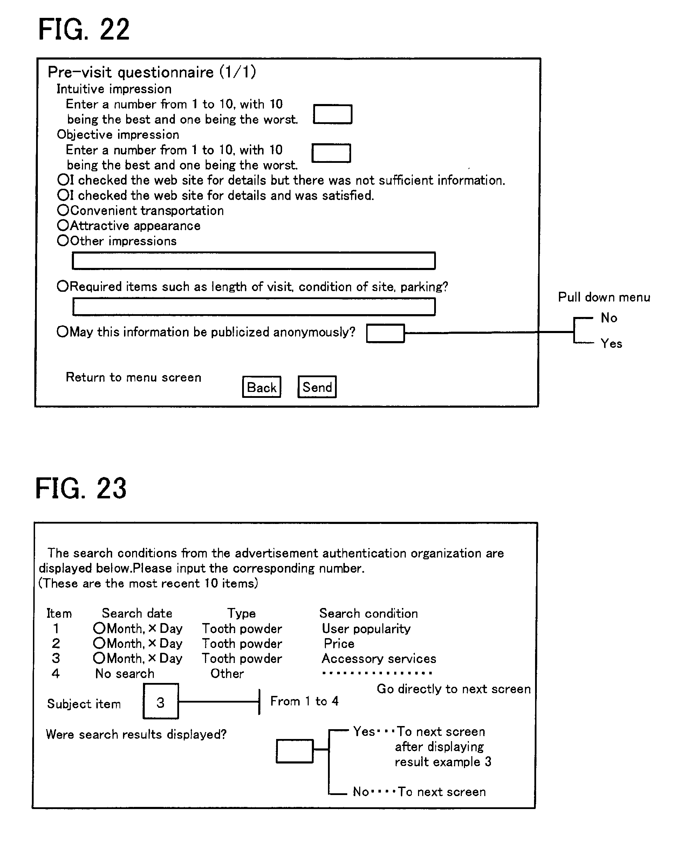

When a dental clinic that is the subject of a response to the pre-purchase questionnaire is selected, the server 3 causes the pre-purchase questionnaire input screen shown in Figure 22 to be displayed on the terminal 1. Because the selected service provider is a hospital in this case, questions relating to hospitals are also included in the contents of the pre-purchase questionnaire. The server 3 stores the pre-purchase questionnaire for each type of goods and services to a main file 31 in advance, extracts the pre-purchase questionnaire corresponding to the goods and services selected from the advertiser database, and causes the questionnaire to be displayed on the terminal 1.

The user inputs responses to the pre-purchase questionnaire and selects "send" to send the response data to the server 3 (S20 in Figure 5). The server 3 stores the response data in a questionnaire file in the user database 32 (S21 in Figure 5).

Moreover, Figures 23 through 25 are screens corresponding respectively to the abovementioned Figures 20 through 22 displayed on the terminal 1 of the user who received the advertisement for tooth powder. For the user who received the advertisement for tooth powder, questions relating to tooth powder and the makers thereof are included in the pre-purchase questionnaire to that user. The response data of that user are also stored in the questionnaire file in the user database 32.

[Implementing a post-purchase questionnaire]

Furthermore, after a user acquires advertisements from the server 3 and purchases the product that is the subject of one of those advertisements or receives a service that is the subject of one of those advertisements, the user can complete a questionnaire relating to those advertisements. This questionnaire is called a post-purchase questionnaire. A post-purchase questionnaire has the purpose of enquiring about the user's feelings and opinions relating to a product which was actually purchased or a service which was actually received, after the purchase of an advertised product or reception of an advertised service. In the present embodiment, the users who received an advertisement are requested to complete such a post-purchase questionnaire and the responses obtained are feedback for the advertiser. Also, in order to improve the response rate for the post-purchase questionnaire, a credit reward of a prescribed amount is paid to the users who respond to the post-purchase questionnaire.

In the case where the user responds to the post-purchase questionnaire, as in the case of the abovementioned pre-purchase questionnaire, in Figure 5, the user terminal 1 receives the post-purchase questionnaire input screen from the server 3 (S22) and causes that screen to be displayed on the terminal 1 (S23).

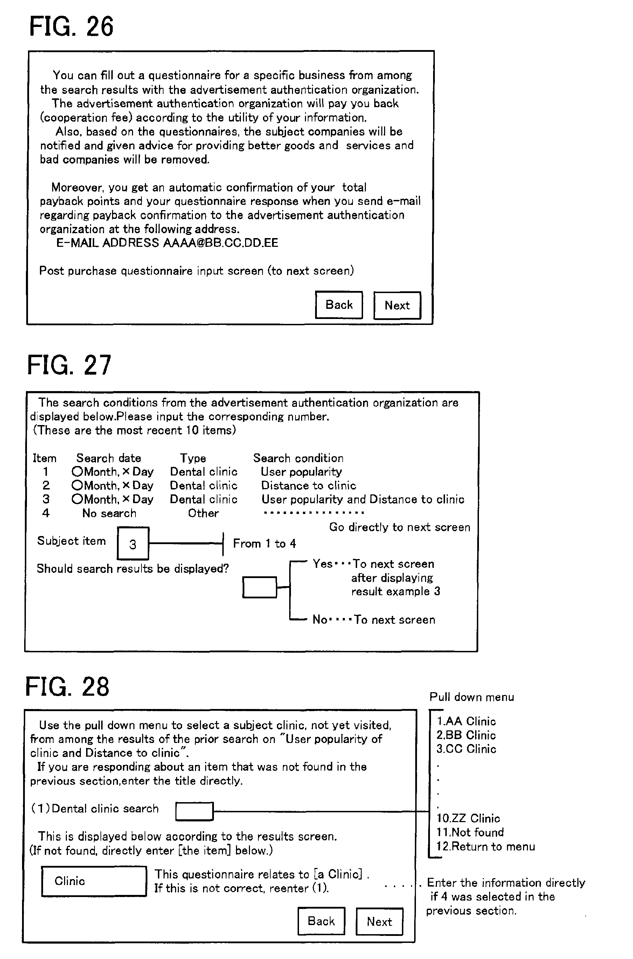

For example, for a user who received an advertisement for a dental clinic to respond to the post-purchase questionnaire, the user causes the menu screen in Figure 7 to be displayed on the user terminal 1 as in the case of the abovementioned pre-purchase questionnaire. At this time, the user A selects "post-purchase questionnaire" from the screen (by clicking with the mouse, for example). Thereupon, the server 3 causes the terminal 1 to display the post-purchase questionnaire input guide screen shown in Figure 26 and then, according to the operation of the user terminal 1, causes the user terminal 1 to display the screen for selecting the advertiser who is the subject of the post-purchase questionnaire as shown in Figures 27 and 28. Figures 26 through 28 are screens displayed on the terminal 1 of the user who received the advertisement for the dental clinic and are the same as Figures 19 through 21 discussed above; an explanation thereof is therefore omitted.

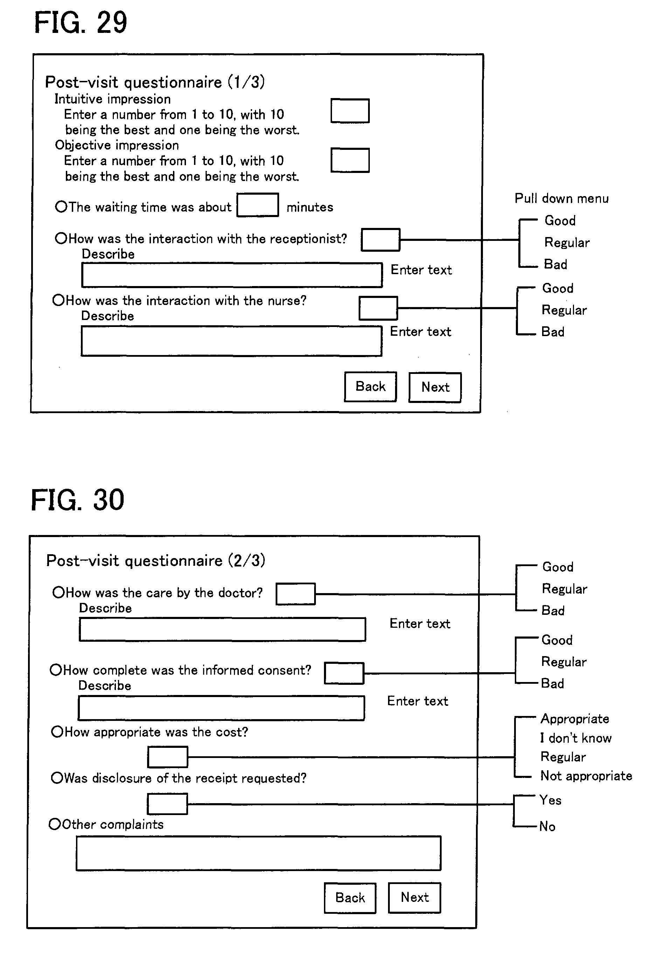

When the dental clinic, which is the subject of the post-purchase questionnaire response, is selected, the server 3 causes the post-purchase questionnaire input screen shown in Figures 29 through 31 to be displayed in order on the terminal 1. In this case, because the selected service provider is a hospital, questions relating to hospitals are also included in the contents of the post-purchase questionnaire. As in the case of the pre-purchase questionnaire, the server 3 stores the post-purchase questionnaire for each type of good and service in advance in a main file 31, extracts the post-purchase questionnaire corresponding to the goods and services selected from the main file 31, and causes the questionnaire to be displayed on the terminal 1.

The user inputs the response to the post-purchase questionnaire and selects "send" to send the response data to the server 3 (S24 in Figure 5). The server 3 stores the response data in a questionnaire file in the user database 32 (S25 in Figure 5).

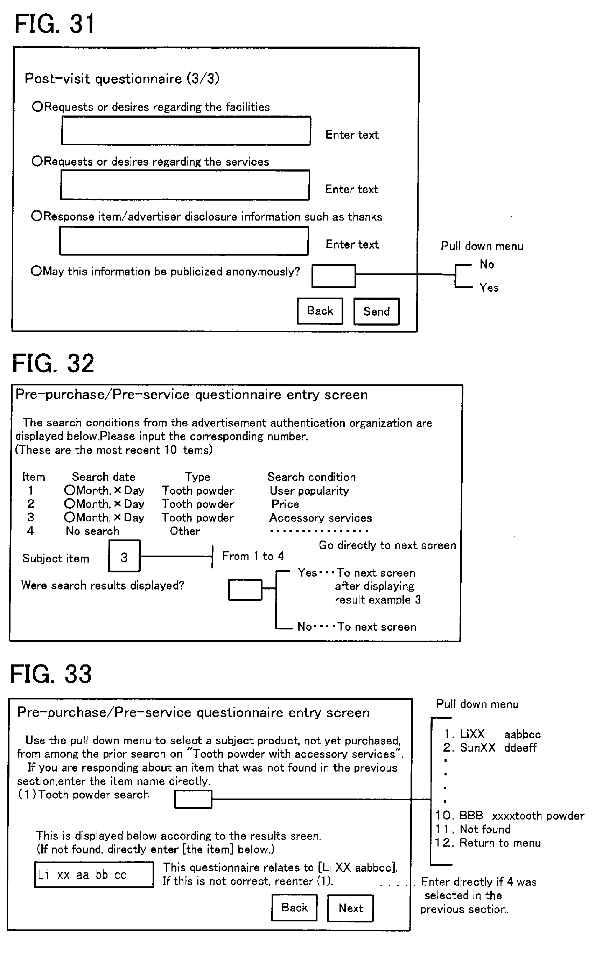

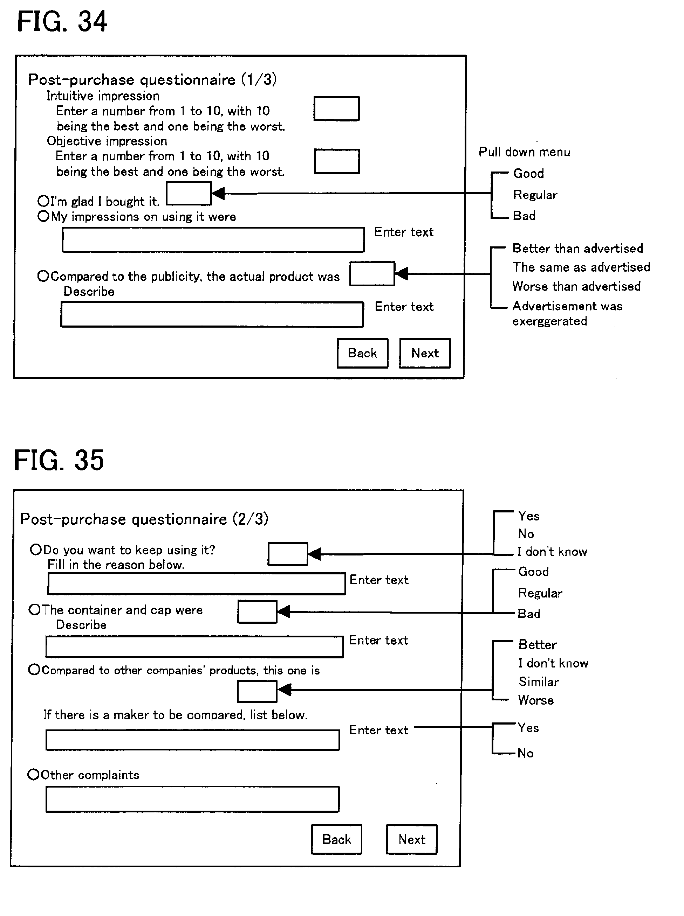

Moreover, Figures 32 and 33 are each examples of the screen for selecting goods which are the subject of the post-purchase questionnaire shown on the terminal 1 of the user who received the advertisement for tooth powder and correspond respectively to the abovementioned screens shown in Figures 20 and 21; an explanation thereof is therefore omitted. Also, Figures 34 through 36 are examples of the post-purchase questionnaire input screens relating to tooth powder. A questionnaire relating to tooth powder is prepared for the user who received advertisements for tooth powder. The response data for this user is also stored in a questionnaire file in the user database 33.

Moreover, the post-purchase questionnaire includes questions for the user respond to by expressing the level of satisfaction with the goods and services as a numerical value (including a binary value for good or bad). Accordingly, the server compiles and processes the level of satisfaction with numerical values (for example, calculates an average value), and can therefore give a numerical value for the level of satisfaction (namely, popularity), of all users who actually purchased the goods and services, and thereby find the level of popularity.

Consequently, in the case where search conditions in order of popularity are designated, the server 3 can distribute highly effective advertisements by selecting goods and services on the basis of questionnaire responses by users who actually purchased the goods and services.

[Providing information based on questionnaire results]

In Figure 6, a server 3 responds to a request from the advertiser terminal 2 (S34), generates various types of information based on the results of the compiled responses to pre-purchase questionnaires and/or post-purchase questionnaires from users (S35), and distributes that information to the terminal 2 (S36), and the distributed information is displayed on the terminal 2 (S37).

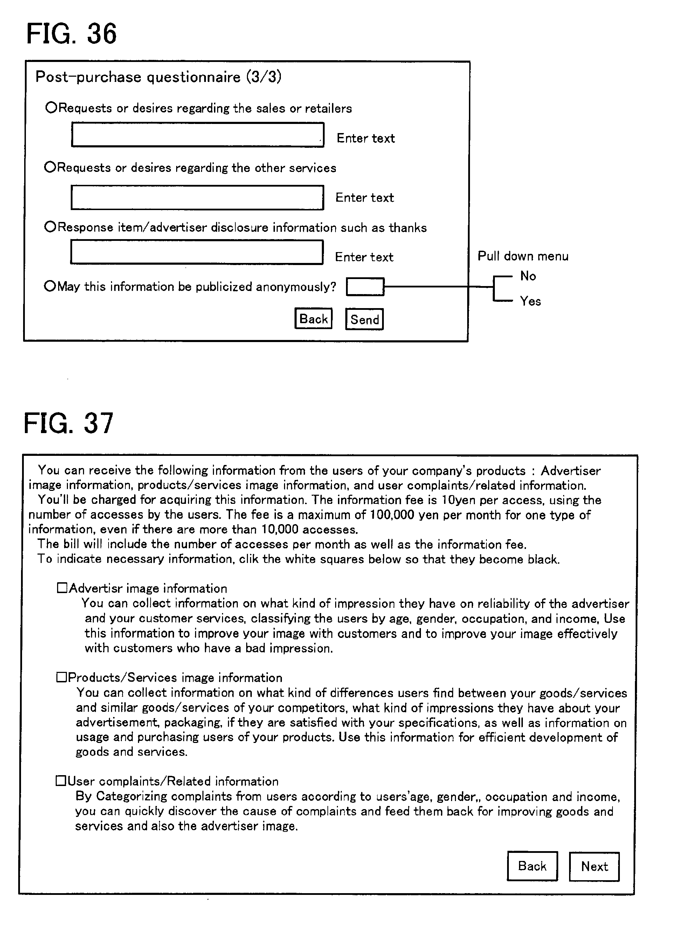

Specifically, the advertiser clicks on "provide information" under the heading "Advertiser" in the menu screen in Figure 7. Thereupon, the login screen as in Figure 10 discussed above is displayed on the terminal 2. The advertiser inputs the advertiser ID and password provided during registration. The server 3 compares the authentication information input with the authentication information registered in the advertiser database 33 and if the authentication information is correct, causes the advertiser terminal 2 to display the "provide information" selection screen as shown in Figure 37. As shown in the drawing, the information provided includes advertiser image information, product image information, and user complaints/related information, for example. Hereinbelow, by way of example, each item of information is explained for the case where the advertiser is the maker who produced the product "tooth powder".

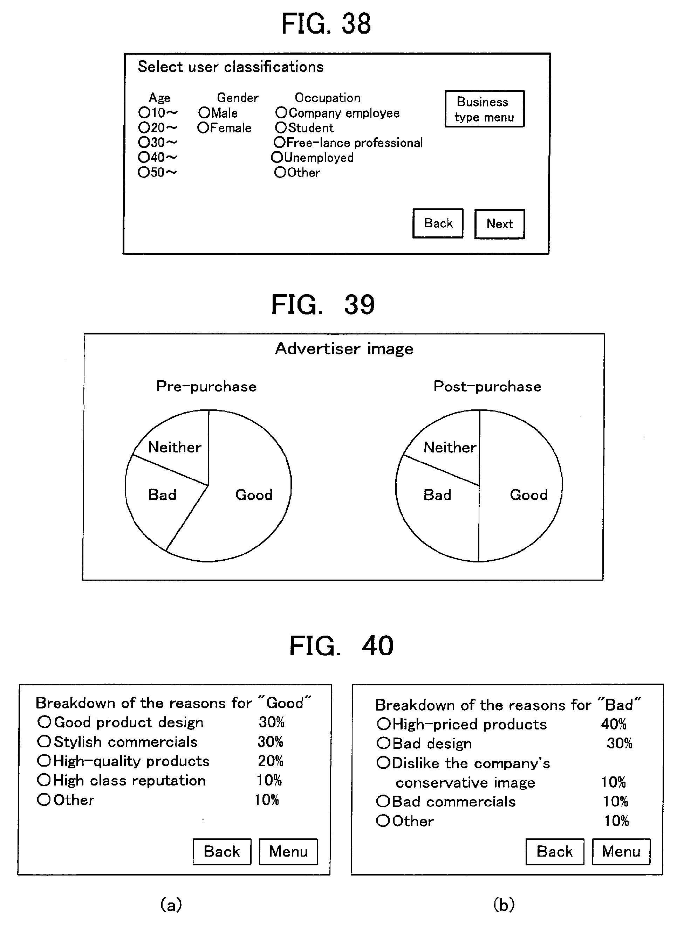

Advertiser image information is information relating to the image and impressions which a user has of an advertiser; the server 3 generates image information for an advertiser before the purchase of a product on the basis of the results of compiling responses to pre-purchase questionnaires, and image information for an advertiser after the purchase of a product on the basis of the results of compiling responses to post-purchase questionnaires. When the advertiser uses the mouse to check the check box for "advertiser image information" on the screen in Figure 37, the server 3 causes the advertiser terminal 2 to display the user classification selection screen shown in Figure 38. User classifications include age, gender, occupation, and so forth. The advertiser operates the mouse and checks the desired user type to select users who responded to the questionnaire. The users can check a plurality of classification items and can also check all classification items.

When the advertiser selects the subject users and then clicks "Next", the server 3 causes the terminal 2 to display pre-purchase advertiser image information based on the results of compiling responses to pre-purchase questionnaires, and post-purchase advertiser image information based on the results of compiling responses to post-purchase questionnaires, as shown in Figure 39. In the advertiser image information in Figure 39, the image a user has may be classified as "good", "bad", or "neutral", for example; the percentages of people having those views are displayed in a pie chart. The display format is not limited to a pie chart and may also be another type of display format such as a bar graph, a dotted line graph, or a table of numerical values.

When clicking on the "good" and "bad" sections in the pie chart displayed on the screen in Figure 39, the breakdown of the reasons for each of those views may also be displayed. Figures 40 (a) and 40(b) are examples of screens displaying the breakdown of the reasons for the "good" and "bad" images. Furthermore, the details of the responses to each of the question items in the questionnaire, such as reasons other than the reasons displayed, may be displayed by clicking on "other" among the reasons in Figures 40 (a) and 40(b).

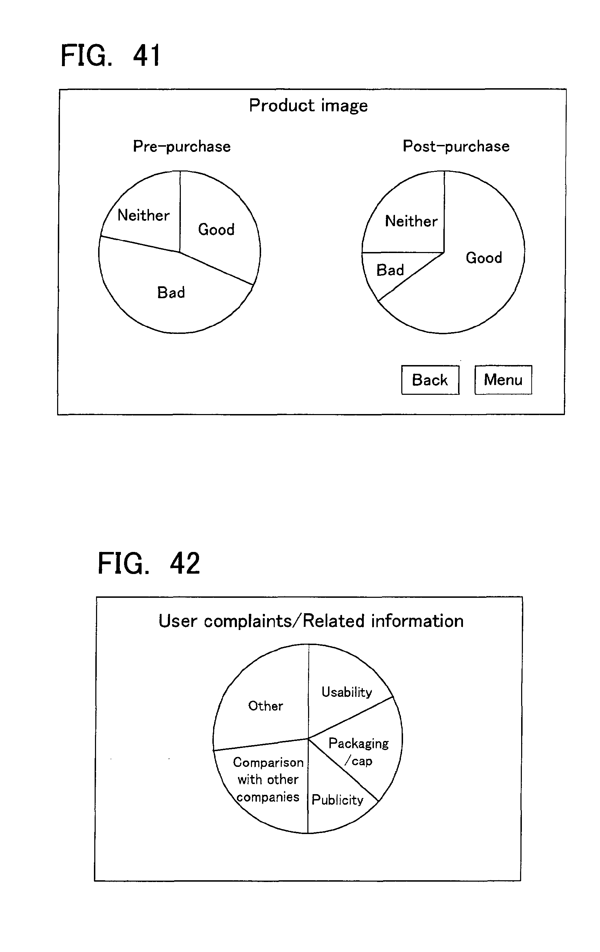

Goods and services image information is information relating to images and impressions users have relating to goods and services provided by the advertiser and is generated on the basis of the results of compiling responses to both pre-purchase questionnaires and also post-purchase questionnaires. When the advertiser uses the mouse to check the check box for "image information for advertisers of goods and services" on the screen in Figure 37, the server 3 causes the advertiser terminal 2 to display the user classification selection screen shown in Figure 38. When the advertiser selects the users on the screen in Figure 38 and then clicks "Next", the server 3 causes the terminal 2 to display pre-purchase goods and services image information based on the results of compiling responses to pre-purchase questionnaires, and post-purchase goods and services image information based on the results of compiling responses to post-purchase questionnaires, as shown in Figure 41. In the goods and services image information in Figure 41, the image which a user has, may be, for example, classified as "good", "bad", or "neutral" and the percentages of people holding those views are displayed in a pie chart. By clicking on the "good" and "bad" sections in the pie chart, a screen showing the breakdown of the reasons for each of those views is displayed (not shown), as discussed above.

User complaints and related information is information that is a collection of user complaints and opinions from users inputted in the post-purchase questionnaire. When the advertiser uses the mouse to check the check box for "user complaints and related information" on the screen in Figure 37, the server 3 causes the advertiser terminal 2 to display the user classification selection screen shown in Figure 38 as discussed above. When the advertiser selects the users on the screen in Figure 38 and then clicks "Next", the server 3 causes the terminal 2 to display the user complaints and related information shown in Figure 42 and based on the results of compiling responses to post-purchase questionnaires. In Figure 42 also, the user complaints and related information are classified by item and the percentages for each are displayed in a pie chart. By clicking on the sections for each item in the pie chart, a screen showing the breakdown of the reasons for each item can be displayed (not shown).

In this way, the advertiser can learn in the customer's own voice, the customers feelings, opinions, and impressions relating to the particular advertiser and/or goods and services provided by the advertiser. As a result, this information can play a major role in publicity strategies and product development.

Moreover, the advertiser is charged for receiving the abovementioned types of information. The charges are set according to the number of users responding to the questionnaires, for example. Specifically, the number of users who responded to the questionnaires is periodically (for example, once per month) compiled for each advertiser and a unit price per user (10 yen, for example) is set. Each advertiser is then charged an amount that is the number of users set when compiling the questionnaires multiplied by that unit price. During the period up until the compilation time, the number of users responding to the questionnaires is expected to increase. In response to a request to provide information from the advertiser, the server 3 provides the abovementioned items of information on the basis of the questionnaire results from the most recent number of users.

[Question management]

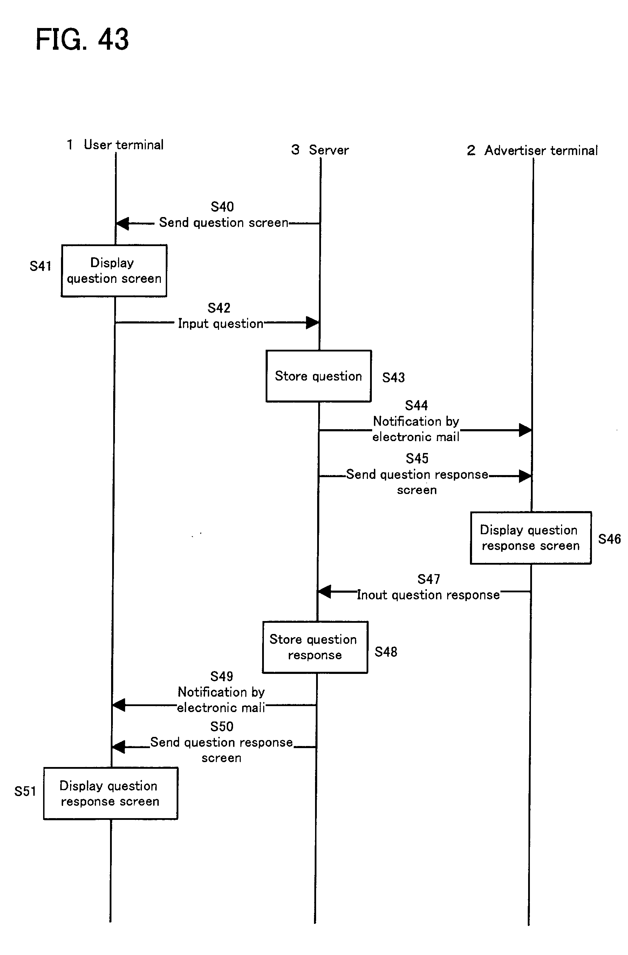

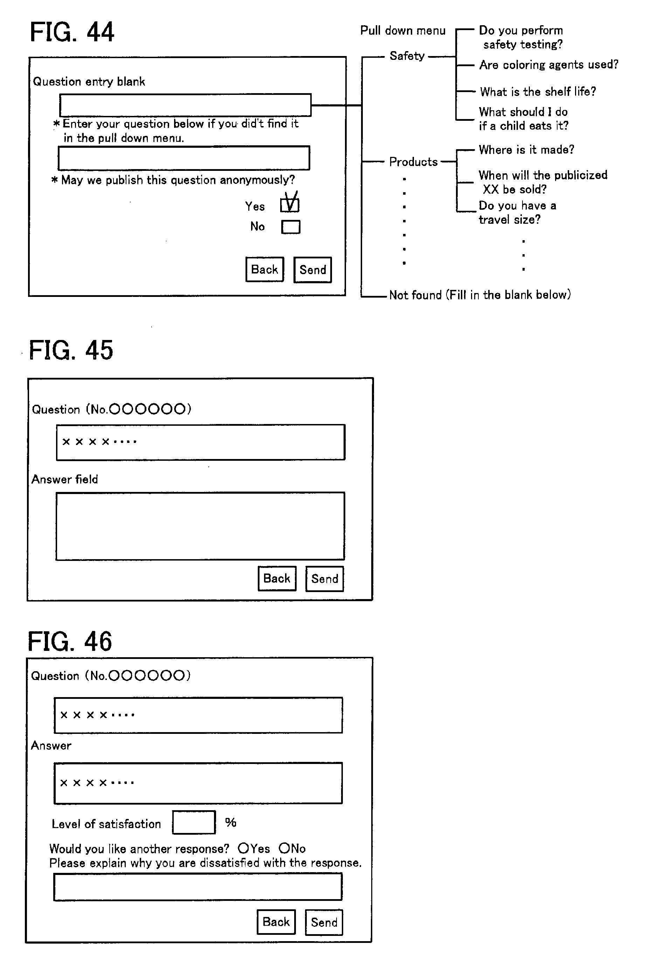

The user can ask the advertiser questions through the advertisement broker. Figure 43 is a flowchart of the question process in the server 3. First, the user causes the menu screen in Figure 7 to be displayed on the user terminal 1 and selects with an input device (clicks with a mouse) "Ask question" under the heading "Consumer" on the screen. After that, the same screens as in Figures 19 to 21 are displayed in order on the user terminal 1; the user selects the advertiser to be questioned as instructed by the screen. When the advertiser is selected, the server 3 sends the question input screen to the terminal 1 (S40), by which means the question input screen as shown in Figure 44 is displayed on the terminal 1 (S41).

When the user clicks on the question field in the question input screen in Figure 44, the contents of previous questions are searched in a tree structure as in Figure 44. Also, when there is no match, the user can fill in and display the field directly and select "send". When there is a corresponding item in the question field, the server 3 performs the count for the identification number of the matching question, provided at the time of registration and adds and stores the number as part of the parameters for the question file. In the case of (S43) or when there is no corresponding item, when data input directly to the lower section of the input screen in Figure 44 are received as a question from the user terminal 1 (S42), an identification number is applied to that question and is stored in the question file corresponding to the matching advertiser in the advertiser database 33 (S43). Only in the case where there is no match for a question, the server 3 automatically generates an electronic mail for the advertiser to the effect that there is a question, which includes the identification number thereof and a time limit for a response, and sends that mail to the electronic mail address of the advertiser registered in advance (S44).

The case where there is no match for a question in the upper list in Figure 44 is discussed hereinbelow. Upon receiving an electronic mail, the advertiser selects "question response" under the heading "Advertiser" in the menu screen in Figure 7. Thereafter, authenticity verification is performed through the authenticity verification screen (not shown) for inputting the advertiser ID, password, and the question identification number. The server 3 then sends the question response screen as shown in Figure 45 (S46) and displays the question response screen on the terminal 2. The advertiser inputs the response in the question response screen and upon completing inputting of the response, clicks on "send" (S47).

Upon receiving a response, the server 3 stores the response in the question file which has the corresponding identification number (S48), notifies the user with an electronic mail that there is a response (S49), and, in addition, saves the question and response in the advertiser database 33.

The display address in Figure 46, for viewing the response corresponding to the question, is linked to the mail. Upon receiving the electronic mail, the user references the address directly or selects "view response" from the menu screen in Figure 7. Authenticity verification is then performed by means of the authenticity verification screen (Figure 10) where the user ID and password are input. Thereafter, the server 3 sends the question response screen as shown in Figure 46 (S50), and the response to the question is displayed on the terminal 2 (S51). Moreover, in the case where there is a corresponding item corresponding to the question in Figure 44, the matching response is immediately retrieved from the advertiser database 33 and displayed on the screen in Figure 46.

The user is able to input, in the screen in Figure 46,his or her level of satisfaction with the contents of the response. In the case of requesting a new response when the response is inadequate, the user makes an entry to that effect and clicks "send". As discussed above, the server 3 notifies the advertiser with an electronic mail to the effect that a new response is required and the advertiser makes another response.

Moreover, only past questions directed toward advertisers, and responses thereto, whose anonymous publication on the screen in Figures 22, 25, and 44 has been permitted, are added by the server to the pull-down menu in Figure 44 and provided on a public question and answer site. The question input screen in Figure 44 may also be linked to this question and answer site. In the question input screen in Figure 44, the user displays earlier questions (Figure 44) before inputting questions from the upper box in Figure 44. The tree structure of the pull-down menu in the upper box in Figure 44 is preferably capable of classifying questions by the date and time of the question and the type of question (price, quality, etc.). Before inputting a question, the user confirms whether the question he or she is attempting to ask has been asked before and if not, selects no match in the upper box and inputs the question in a lower box.

Also, the server 3 monitors the response deadline for each question input directly in a lower box without a match in the upper box and sends an electronic mail to urge the advertiser to respond when a response is not received by the response deadline.

[Judging the contribution level of a questionnaire]

In the present embodiment as discussed above, a prescribed reward is paid to users who respond to pre-purchase questionnaires and post-purchase questionnaires. Moreover, the reward may be in the form of purchase discount points or the like, but a credit reward is explained hereinbelow. The amount of the reward may be set as follows, for example: a unit value for one response to a questionnaire (for example, 10 yen) is set, the number of responses to questionnaires by each user is compiled periodically (for example, once per month), and a reward amount proportional to that number is determined. As explained below, the present embodiment is configured to judge the contribution level to the advertiser of the response to the questionnaire and pays an amount of money corresponding to that contribution level. An example of the method for judging the level of contribution is explained hereinbelow.

The following three parameters are set for judging the contribution level.

(1) Importance (P)

Number of key words registered in advance by the advertiser or advertisement broker (KP)

Number of keywords having a negative effect on the user (CP)

(For example, death, injury, food poisoning, etc.)

Number of key words having a negative effect on the advertiser (BP)

(For example, litigation, trial, impropriety, hazard, etc.)
For a ratio of KP:CP:BP = 2:5:3

$$X\,(\%) = (0.2KP + 0.5CP + 0.3BP) \times 100 \ (100 \text{ is the maximum})$$

$$80\% < X \leq 100\% \quad P = 6$$

$$60\% < X \leq 80\% \quad P = 5$$

$$40\% < X \leq 60\% \quad P = 4$$

$$20\% < X \leq 40\% \ P = 3$$

$$10\% < X \leq 20\% \ P = 2$$

$$0\% < X \leq 10\% \ P = 1$$

$$X = 0\% \ P = 0$$

(2) Credibility (R)

Percentage of user registration information entered $\times$ confidence in the user (PR)

The percentage of the user registration information entered is the percentage of all information requested, at the time of user registration, which was actually entered. Also, confidence in the user is on a point scale according to the user's age, occupation, and so forth.

$$X \ (\%) = PR \times 100 \ (100 \text{ is the maximum})$$

$$80\% < X \leq 100\% \ R = 100\%$$

$$60\% < X \leq 80\% \ R = 80\%$$

$$40\% < X \leq 60\% \ R = 60\%$$

$$20\% < X \leq 40\% \ R = 40\%$$

$$10\% < X \leq 20\% \ R = 20\%$$

$$0\% < X \leq 10\% \ R = 10\%$$

$$X = 0\% \ R = 0\%$$

(3) Novelty (A)

Inverse of the percentage of same user opinions and similar information of all the opinions (RA)

Inverse of the percentage of the number of incidences of prior similar information for a similar product (PA)

$$X \ (\%) = (RA+PA) \times 100 \ (100 \text{ is the maximum})$$

$$80\% < X \leq 100\% \ A = 2$$

$$20\% < X \leq 80\% \quad A = 1$$

$$0\% < X \leq 20\% \quad A = 0.1$$

Then the total amount (RX) set aside for rewarding questionnaire responses is

$$RX = AX + CX$$

AX: Expenses of advertiser (for example, campaign expenses and support expenses)
CX: Expenses of advertisement broker (for example, 1% of net profits of advertisement broker)
The level of contribution of each questionnaire (amount of reward corresponding to the level of contribution) is judged with the following formula using the abovementioned three parameters.

Reward amount per questionnaire (PCOST)

$$PCOST = (RX/\text{total number of questionnaires}) \times P \times R \times A \tag{1}$$

The PCOST for each questionnaire is estimated in order of highest PCOST and the calculated reward amount is paid to each user responding to the highest ranked N questionnaires for which that estimate does not exceed the abovementioned total amount RX.

In the case discussed above, however, the reward amount is not paid in some cases even when a questionnaire is answered when the reward amount (PCOST) calculated with the abovementioned formula (1) is low. In order to avoid such a situation, a standard minimum reward amount (for example, 10 yen) is paid for all questionnaires and the abovementioned formula (1) may be subsequently applied to the remaining total amount (RX - total number of questionnaires $\times$ 10).

In this way, it is judged whether the responses to questionnaires will be useful information for the advertisers. Paying a reward amount in accordance with the usefulness thereof encourages the users to make higher-quality responses.

Moreover, the types of goods and services are not limited to dental clinics and tooth powder as discussed hereinabove, and include all types of goods and services such as food products, sundry goods, gardening supplies, cars, homes, real estate, medicine, financial products, insurance, and so forth, as shown in Figures 8 and 9. The search conditions are not limited to popularity, price, and so forth, and a large number of search conditions can be set, such as level of environmental protection, reliability, short delivery time, and sales.

With the present invention above, a consumer (user) is able to easily acquire highly effective advertisements when necessary. Also, an advertiser can distribute advertisements efficiently to users who need those advertisements and can use the results of questionnaires from users in publicity activities. Paying a prescribed reward amount for a user's response to a questionnaire can increase the consumers' response rate to questionnaires. Furthermore, it is possible to judge the level of contribution, of a questionnaire response, to an advertiser and set the reward amount according to the level of contribution; this makes it possible to encourage high quality responses by users to questionnaires.

The scope of protection of the present invention is not limited to the abovementioned embodiment and covers inventions mentioned in the patent claims and equivalent items.

**Claims**

1. A method for distributing advertisements to a user through a computer network, comprising the steps of:

   storing advertiser registration information including advertisement information for goods and/or services provided by an advertiser according to a registration request by said advertiser;
   storing user registration information including search conditions for goods and/or services specified by said user according to a registration request by said user;

extracting advertisement information matching said search conditions from among said stored advertisement information; and

distributing said extracted advertisement information to said user.

2. The method for distributing advertisements according to Claim 1, wherein said computer network is the Internet; and said extracted advertisement information is distributed as an Internet web page screen to a terminal of said user connected to the Internet.

3. The method for distributing advertisements according to Claim 1, wherein said computer network is the Internet; and said extracted advertisement information is distributed as electronic mail to the terminal of said user connected to the Internet.

4. The method for distributing advertisements according to Claim 1, 2, or 3, comprising the steps of:

   storing questionnaires relating to goods and/or services corresponding to said distributed advertisement information and relating to advertisers providing these goods and/or services;
   distributing said questionnaires to said users; and
   receiving and storing responses to said questionnaires from said users.

5. The method for distributing advertisements according to Claim 4, wherein said questionnaires include pre-purchase questionnaires for said user to respond before said user purchases the goods and/or services corresponding to said distributed advertisement information, and/or post-purchase questionnaires for said user to respond after said user purchases the goods and/or services corresponding to said distributed advertisement information.

6. The method for distributing advertisements according to Claim 5, wherein said pre-purchase questionnaires include questions for gathering impressions said user has of said goods and/or services, or of the advertisers providing these goods and/or services, before said user purchases the goods and/or services corresponding to said distributed advertisement information.

7. The method for distributing advertisements according to Claim 5 or 6, wherein said post-purchase questionnaires include questions for gathering feelings and opinions said user has of said goods and/or services, or of the advertisers providing these goods and/or services, after said user purchases the goods and/or services corresponding to said distributed advertisement information.

8. The method for distributing advertisements according to any of Claims 4 to 7, wherein a prescribed reward amount is paid to users who respond to said questionnaires.

9. The method for distributing advertisements according to Claim 8, comprising the steps of:

   judging a level of contribution, of said questionnaire response, to said advertiser; and
   determining a reward amount for each questionnaire response on the basis of that level of contribution.

10. The method for distributing advertisements according to any of Claims 4 to 9, wherein results of compiling said questionnaire responses for a specific advertiser or the goods and services provided by the advertiser are distributed to said specific advertiser.

11. The method for distributing advertisements according to any of Claims 4 to 10, wherein advertisement information matching said search conditions is extracted on the basis of said questionnaire responses.

12. The method for distributing advertisements according to any preceding claim, further comprising the steps of:

   receiving questions, regarding goods and/or services corresponding to said distributed advertisement information or regarding the specific advertiser providing these goods and/or services, from a specific user;
   storing said questions and then forwarding the questions to said specific advertiser;
   receiving a response to said questions from said specific advertiser; and
   storing the response to said questions and then distributing the response to the questions to said specific user.

13. The method for distributing advertisements according to Claim 12, further comprising the steps of:

setting a response deadline for the response to said questions for said specific advertiser; and
urging said specific advertiser to respond to said questions when a response to said questions is not received by said response deadline.

14. An apparatus for distributing advertisements to users through a computer network, comprising:

a memory unit for storing advertiser registration information, including advertisement information for goods and/or services provided by an advertiser, according to a registration request by the advertiser; and storing user registration information including search conditions for goods and/or services specified by said user according to a registration request by said user; and
a control unit for extracting advertisement information, matching said search conditions, from among said stored advertisement information; and distributing said extracted advertisement information to said user.

15. The apparatus for distributing advertisements according to Claim 14, wherein said memory unit stores questionnaires relating to goods and/or services corresponding to said distributed advertisement information and relating to advertisers providing these goods and/or services; and said control unit distributes said questionnaires to said users, receives responses to said questionnaires from said users, and stores responses to the questionnaires in said memory unit.

16. The apparatus for distributing advertisements according to Claim 15, wherein said questionnaires include pre-purchase questionnaires for said user to respond before said user purchases the goods and/or services corresponding to said distributed advertisement information, and/or post-purchase questionnaires for said user to respond after said user purchases the goods and/or services corresponding to said distributed advertisement information.

17. The apparatus for distributing advertisements according to Claim 15 or 16, wherein said control unit judges a level of contribution, of said questionnaire response, to said advertiser, and determines a reward amount for each questionnaire response on the basis of that level of contribution, in the case where a prescribed reward amount is paid to users who respond to said questionnaires.

18. The apparatus for distributing advertisements according to Claim 15, 16, or 17, wherein said control unit compiles said questionnaire responses for a specific advertiser or the goods and/or services provided by the advertiser and distributes the compiled results to said specific advertiser.

19. The apparatus for distributing advertisements according to any of Claims 15 to 18, wherein said control unit extracts advertisement information, matching said search conditions on the basis of said questionnaire responses.

20. The apparatus for distributing advertisements according to any of Claims 14 to 19, wherein, upon receiving questions, from a specific user, regarding goods and/or services corresponding to said distributed advertisement information or regarding the specific advertiser providing these goods and/or services, said control unit stores said questions in said memory unit and then forwards the questions to said specific advertiser; and upon receiving the response to said questions from said specific advertiser, said control unit stores the response to said questions in said memory unit and then distributes the response to the questions to said specific user.

21. The apparatus for distributing advertisements according to Claim 20, wherein said control unit sets a response deadline for the response to said questions for said specific advertiser, and urges said specific advertiser to respond to said questions when a response to said questions is not received by said response deadline.

FIG. 1

```
                    ┌──────────┐
                    │    3     │
                    │  Server  │
                    └────┬─────┘
                         │
┌──────────────┐         │          ┌──────────────┐
│      1       │    ╭────┴─────╮     │      2       │
│ User terminal│────┤          ├─────│  Advertiser  │
└──────────────┘    │ Internet │     │   terminal   │
                    │          │     └──────────────┘
┌──────────────┐    ╰────┬─────╯     ┌──────────────┐
│      1       │─────────┘           │      2       │
│ User terminal│─────────────────────│  Advertiser  │
└──────────────┘                     │   terminal   │
                                     └──────────────┘
       .                                    .
       .                                    .
       .                                    .
```

FIG. 2

3 Server

```
┌────────────────────────────────────────────────────┐
│                                                      │
│   ┌──────────┐          ┌──────────┐                 │
│   │   31     │          │   30     │                 │
│   │Main file │◄────────►│ Control  │──────►Internet   │
│   │          │          │ portion  │                 │
│   └──────────┘          └──┬────┬──┘                 │
│         ▲                  │    ▲                     │
│         │                  ▼    │                     │
│    ╭────┴────╮        ╭────▼────┴╮                    │
│   ╱   32    ╱│       ╱   33     ╱│                    │
│  │  User   │ │      │Advertiser│ │                    │
│  │database │ │      │ database │ │                    │
│   ╲_____╱╱        ╲_____╱╱                      │
│                                                      │
└────────────────────────────────────────────────────┘
```

# FIG. 3

User database 32

User registration file
   User name (User A)
   User ID
   Password
   Registration information
   ...
   Account with financial institution
   Questionnaire response history
   Payment history
   Etc.

User A

Advertisement distribution file
   Distribution number
   Distribution date and time
   Distribution contents
   Etc.

User registration file
   User name (User B)
   User ID
   Password
   Registration information
   ...
   Account with financial institution
   Questionnaire response history
   Payment history
   Etc.

User B

Advertisement distribution file
   Distribution number
   Distribution date and time
   Distribution contents
   Etc.

# FIG. 4

Advertiser database 33

Advertiser X

Advertiser registration file
  Advertiser name (Advertiser X)
  Advertiser ID
  Registration information
  ...
  Account with financial institution
  Questionnaire response situation
  Etc.

Questionnaire file
  Questionnaire number
  Response date and time
  Responding user ID
  Response contents, etc.

Question file
  Question number
  Question date and time
  Questioner user ID
  Question contents

  Response contents
  Etc.

Advertiser Y

Advertiser registration file
  Advertiser name (Advertiser Y)
  Advertiser ID
  Registration information
  . . .
  Account with financial institution
  Questionnaire response situation
  Etc.

Questionnaire file
  Questionnaire number
  Response date and time
  Responding user ID
  Response contents, etc.

Question file
  Question number
  Question date and time
  Questioner user ID
  Question contents

  Response contents
  Etc.

EP 1 209 600 A1

# FIG. 5

User terminal 1                                    Server 3

S10
◄──Send registration screen──

S11 | Display registration screen |

S12
──Input registration information──►

S13 | Register to database |

S14
◄──Notification of ID and password──

S15 | Generate advertisement |

S16
◄──Send advertisement screen──

S17 | Display advertisement screen |

S18
◄── Send pre-purchase questionnaire screen

S19 | Display pre-purchase questionnaire screen |

S20
Input pre-purchase questionnaire response ──►

S21 | Update database |

S22
◄── Send post-purchase questionnaire screen

S23 | Display post-purchase questionnaire screen |

S24
Input post-purchase questionnaire response ──►

S25 | Update database |

# FIG. 6

Server 3                    Advertiser terminal 2

S30
—Send registration screen—→

Display
registration    S31
screen

S32
←—Input registration information—

S33  Register to
database

S34
—Notification of ID and password—→

S35
←——Request information——

S36  Generate
information

S37
——Send information screen——→

Display
information    S38
screen

# FIG. 7

| Advertisement broker site | Menu | |
|---|---|---|
| | Register | |
| For advertiser | Provide information | |
| | Respond to question | |
| For consumer (user) | Register | Ask a question |
| | Search | View response |
| | Pre-purchase questionnaire | |
| | Post-purchase questionnaire | |

# EP 1 209 600 A1

# FIG. 8

Company name/Company information (founding date/employees/sales/rating, etc.)

Type of products

← Pull down menu

Food
Miscellaneous
Gardening products
Household vehicle
Homes
Real-estate
Medical supplies
Medical treatment
Financial institution
Insurance
Etc.

Product name

Outline of products and services

Sales starting date/Suggested retail price/Standard prices

URL for detailed product specifications/Services

Sales method/Mode of service provision

← Pull down menu

①General retail sales/Stores only
②Mail-order only
③Door-to-door sales only
④Combination of 1 through 3

Sales region

← Pull down menu

①Kanto only
②Kansai only
③Hokkaido only
④kyushu only
⑤Japan only
⑥Other (overseas only)
⑦Combination of 1 through 6

Shipping conditions

← Pull down menu

General
Frozen
Refrigerated
Moisture-proof
Earthquake proof (poison/radiation proof)
Special

Restrictions on sales

← Pull down menu

①Only to medical institutions
②Only to ages 18 and older
③Only to holders of license for handling hazardous materials
④Other

Cooling-off conditions

← Pull down menu

Unopened          100% refund
Opened but unused    % refund
Used              % refund
Pay shipping costs

Maintenance/Follow-up services

← Pull down menu

Net period/Mandatory maintenance period _____ days
Grievance reception (telephone/fax/e-mail)
(Maintenance/Continuing service)
Useful life/Life span
Consumable items/Replacement parts/Particulars
Completeness of informed consent (medical treatment)
Other characteristics

20

# FIG. 9

User name/Input e-mail address/Credit card transaction information

[ ]

Type of products

[ ] ← Pull down menu

Product name to be searched (if indicated)

[ ]

Outline of products and services to be searched (if indicated)

[ ]

Search condition 1 (priority condition)

[ ] ← Pull down menu

Search condition 2 (second priority condition)

[ ] ← Pull down menu

Purchase method

[ ] ← Pull down menu
- In store
- Mail-order
- Door-to-door sales

Indicated delivery date/time

[ ]

Preferred receiving location

[ ] ← Pull down menu
- Home
- Nearest convenience store — X convenience store / Y convenience store
- Other — Address/Telephone number input screen

Indicate cooling-off conditions

[ ] ← Pull down menu — Indicate if possible

Maintenance/Follow-up services

[ ] ← Pull down menu — Indicate if possible

Method for distributing information

[ ] ← Pull down menu

Timing of e-mali distribution

[ ] ← Pull down menu

**Type of products list:**
- Food
- Miscellaneous (supermarket/department store)
- Gardening products
- Household vehicle
- Homes
- Real-estate
- Medical supplies
- Medical treatment
- Financial institution
- Insurance
- Etc.

**Search condition list:**
- In order of price(from the lowest)
- In order of price environmentally sensitive products
- In order of distance from the nearet
- In order of accessory services
- In order of product reliability
- In order of product popularity
- In order of overall evaluation from the best
- In order of publicity
- By company
- By usage/specification
- In order of product line
- In order of inventory
- In order of availability
- In order of initial sales date
- In order of user confidence
- In order of service grievance
- In order of overall evaluation from the worst

**Method for distributing information list:**
1. E-mail + hyperlink
2. Log in to homepage
3. By postal mail only
4. Number of mailings
5. Only when conditions are met

**Timing of e-mail distribution list:**
- Setting of mail opening order
1. Real time
2. Set price or lower
3. New release
4. Time of entering inventory
5. Time specified
6. Weekday designated
7. Limited number of mailings
8. Other

# FIG. 10

Input authentication information

User ID

[            ]

Password

[            ]

[Back] [Next]

# FIG. 11

The user's mailng parameters are as follows.
Please reset the parameters should the contents change.

①Type of product/service → Medical organization
②Specific item → Dental care
③Selection condition 1 → Popularity
④Selection condition 2 → Distance from home
⑤Selection condition 3 → Combination of first and
second selection conditions

⑥Mailing parameters → 10 mailings/real time
⑦Maintenance/follow-up service → Detailed display

[Back] [Next]

# FIG. 12

Selection condition 1
Dental clinic
User popularity

| Clinic name | Return rate (%) | Average waiting time | Patient complaints |
|---|---|---|---|
| ①AA Clinic | 98 | 20min | 0 |
| URL with details | HTTP:WWW.AAA.XX.XX | | |
| ②BB Clinic | 90 | 7min | 1 |
| URL with details | HTTP:WWW.BBB.XX.XX | | |
| ⑩ZZ Clinic | 70 | 15min | 5 |
| URL with details | HTTP:WWW.ZZZ.XX.XX | | |

[Back] · [Menu]

## FIG. 13

```
Selection condition 2
Dental clinic
    Distance from home

    Clinic name        Distance        Transportation

    ①BA Clinic         1km             Walking  10min
      URL with details HTTP:WWW.AAA.XX.XX
    ②CB Clinic         3km             Bus  5min   Walking  2min
      URL with details HTTP:WWW.BBB.XX.XX
    ----
    ⑩AZ Clinic         5km             Bus  10min  Walking  1min
      URL with details HTTP:WWW.ZZZ.XX.XX

                                              [ Back ]   [ Menu ]
```

## FIG. 14

```
Selection conditions 1 and 2 (Condition 2 : Within 10 km radius)
Dental clinic
    User popularity and Distance to clinic

    Clinic name        Return rate (%)   Distance    Transportation

    ①AAA Clinic        80                1km         Walking  10min
      URL with details HTTP:WWW.AAX.XX.XX
    ②BBB Clinic        95                3km         Train    35min
      URL with details HTTP:WWW.BBX.XX.XX            Walking   2min
    ----
    ⑩ZZZ Clinic        60                5km         Bus      10min
      URL with details HTTP:WWW.ZZX.XX.XX            Walking   1min

                                              [ Back ]   [ Menu ]
```

## FIG. 15

```
The user's mailing parameters are as follows.
Please reset the parameters should the contents change.

①Type of product/service        → Medical item
②Specific item                  → Tooth powder
③Selection condition 1          → Popularity
④Selection condition 2          → Price
⑤Selection condition 3          → Accessory services
⑥Mailing parameters             → 10 mailings/real time
⑦Maintenance/follow-up service  → Detailed display

                                        [ Back ]   [ Next ]
```

## FIG. 16

Selection condition 1
Tooth powder
  User popularity

  Maker name      Product name      Description

  ①SunXX          CliniX            Anti-pyorrhea (Pharmaceutical)
    URL with details    HTTP:WWW.AAA.XX.XX
  ②LiXX           white & xxxxx     Tartar control
    URL with details    HTTP.WWW.BBB.XX.XX
  ----

  ⑩SunX           XXXX              Tooth whitening
    URL with details    HTTP.WWW.ZZZ.XX.XX

                                    [ Back ]  [ Menu ]

## FIG. 17

Selection condition 2
Tooth powder
  Price

  Maker name      Product name      Description          Price

  ①XXX Yushi   XXXX Tooth powder    Chinese manufacturer   ¥30
    URL with details    HTTP:WWW.AAA.XX.XX
  ②aabb        XXXX Tooth powder    Wholesale to hotels    ¥80
    URL with details    HTTP.WWW.BBB.XX.XX
  ----

  ⑩bbbb        XXXX Tooth powder    Small travel size      ¥100
    URL with details    HTTP.WWW.ZZZ.XX.XX

                                    [ Back ]  [ Menu ]

## FIG. 18

Selection condition 3
Tooth powder
  Accessory services

                                Accessory      Value of accessory
  Maker name      Product name   services       services (Special)

  ①LiXX           aabbcc         100g  free         ¥100
    URL with details    HTTP:WWW.AAA.XX.XX
  ②SunXX          ddeeff         Free toothbrush     ¥80
    URL with details    HTTP.WWW.BBB.XX.XX
  ----

  ⑩bbbb           XXXXTooth powder  Sample product    ¥10
    URL with details    HTTP.WWW.ZZZ.XX.XX

                                    [ Back ]  [ Menu ]

# EP 1 209 600 A1

## FIG. 19

You can fill out a questionnaire for a specific business from among the search results with the advertisement authentication organization.

The advertisement authentication organization will pay you back (cooperation fee) according to the utility of your information.

Also, based on the questionnaires, the subject companies will be notified and given advice for providing better goods and services and bad companies will be removed.

Moreover, you get an automatic confirmation of your total payback points and your questionnaire response when you send e-mail regarding payback confirmation to the advertisement authentication organization at the following address.
E-MAIL ADDRESS AAAA@BB.CC.DD.EE

| Back | Next |

## FIG. 20

The search conditions from the advertisement authentication organization are displayed below.Please input the corresponding number.
(These are the most recent 10 items)

| Item | Search date | Type | Search condition |
|------|-------------|------|------------------|
| 1 | ○Month, × Day | Dental clinic | User popularity |
| 2 | ○Month, × Day | Dental clinic | Distance to clinic |
| 3 | ○Month, × Day | Dental clinic | User popularity and Distance to clinic |
| 4 | No search | Other | · · · · · · · · · · · · · · · · |

Go directly to next screen

Subject item [ 3 ]——————— From 1 to 4

Should search results be displayed? [ ]——— Yes···To next screen after displaying result example 3

└ No····To next screen

## FIG. 21

Pull down menu

Use the pull down menu to select a subject clinic, not yet visited, from among the results of the prior search on "User popularity of clinic and Distance to clinic".
If you are responding about an item that was not found in the previous section,enter the title directly.

(1)Dental clinic search [ ]————

This is displayed below according to the results screen.
(If not found, directly enter the item below.)

| Clinic | This questionnaire relates to [a Clinic] . If this is not correct, reenter (1). |

· · · ·

| Back | Next |

1.AA Clinic
2.BB Clinic
3.CC Clinic
·
·
·
10.ZZ Clinic
11.Not found
12.Return to menu

Enter the information directly if 4 was selected in the previous section.

# FIG. 22

Pre-visit questionnaire (1/1)
Intuitive impression
Enter a number from 1 to 10, with 10
being the best and one being the worst. ☐
Objective impression
Enter a number from 1 to 10, with 10
being the best and one being the worst. ☐
○I checked the web site for details but there was not sufficient information.
○I checked the web site for details and was satisfied.
○Convenient transportation
○Attractive appearance
○Other impressions

☐

○Required items such as length of visit, condition of site, parking?

☐

Pull down menu

○May this information be publicized anonymously? ☐ ─── ┌── No
                                                        └── Yes

Return to menu screen    Back   Send

# FIG. 23

The search conditions from the advertisement authentication organization are displayed below.Please input the corresponding number.
(These are the most recent 10 items)

| Item | Search date | Type | Search condition |
|---|---|---|---|
| 1 | ○Month, ×Day | Tooth powder | User popularity |
| 2 | ○Month, ×Day | Tooth powder | Price |
| 3 | ○Month, ×Day | Tooth powder | Accessory services |
| 4 | No search | Other | ･･･････････････ |

Go directly to next screen

Subject item   ☐ 3 ──── From 1 to 4

Were search results displayed?          ┌── Yes･･･To next screen
                                  ☐ ────┤        after displaying
                                        │        result example 3
                                        └── No････To next screen

# FIG. 24

Pull down menu

Use the pull down menu to select subject product, not yet purchased, from among the prior search on "Tooth powder with accessory services".
If you are responding about an item that was not found in the previous section,enter the item name directly.
（1）Tooth powder search [          ]

This is displayed below according to the results sreen.
(If not found, directly enter the item below.)

[ Li xx aa bb cc ]   This questionnaire relates to [Li XX aabbcc]. If this is not correct, reenter (1).   . . . .

[ Back ]   [ Next ]

1. LiXX     aabbcc
2. SunXX   ddeeff
·
·
·
·
10. BBB  xxxxtooth powder
11. Not found
12. Return to menu

. Enter directly if 4 was selected in the previous section.

# FIG. 25

Pre-purchase questionnaire (1/1)
Intuitive impression
  Enter a number from 1 to 10, with 10
  being the best and one being the worst.   [      ]
Objective impression
  Enter a number from 1 to 10, with 10
  being the best and one being the worst.   [      ]
◯I checked the web site for details but there was not sufficient information.
◯I checked the web site for details and was satisfied.
◯Price too high
◯I felt it wasn't healthy
◯Difficult to use
◯Packaging is not good
◯If you tried and liked the trial product, fill in the following
    if you know the source of the trial product
    Location, retailer name, etc. [                    ]   ——— Enter directly

◯Other impressions
[                    ]   ——— Enter directly

◯May this information be publicized anonymously?

[      ]

Pull down menu
  — No
  — Yes

[ Back ]   [ Send ]

# FIG. 26

You can fill out a questionnaire for a specific business from among the search results with the advertisement authentication organization.

The advertisement authentication organization will pay you back (cooperation fee) according to the utility of your information.

Also, based on the questionnaires, the subject companies will be notified and given advice for providing better goods and services and bad companies will be removed.

Moreover, you get an automatic confirmation of your total payback points and your questionnaire response when you send e-mail regarding payback confirmation to the advertisement authentication organization at the following address.

E-MAIL ADDRESS AAAA@BB.CC.DD.EE

Post purchase questionnaire input screen (to next screen)

| Back | Next |

# FIG. 27

The search conditions from the advertisement authentication organization are displayed below.Please input the corresponding number.
(These are the most recent 10 items)

| Item | Search date | Type | Search condition |
|------|-------------|------|------------------|
| 1 | ○Month, ×Day | Dental clinic | User popularity |
| 2 | ○Month, ×Day | Dental clinic | Distance to clinic |
| 3 | ○Month, ×Day | Dental clinic | User popularity and Distance to clinic |
| 4 | No search | Other | ·············· |

Go directly to next screen

Subject item [ 3 ]————— From 1 to 4

Should search results be displayed? [ ]

Yes···To next screen after displaying result example 3

No····To next screen

# FIG. 28

Pull down menu

Use the pull down menu to select a subject clinic, not yet visited, from among the results of the prior search on "User popularity of clinic and Distance to clinic".
If you are responding about an item that was not found in the previous section,enter the title directly.

(1)Dental clinic search [ ]

This is displayed below according to the results screen.
(If not found, directly enter [the item] below.)

| Clinic | This questionnaire relates to [a Clinic] . If this is not correct, reenter (1). | · · · · |

| Back | Next |

1.AA Clinic
2.BB Clinic
3.CC Clinic
·
·
·
10.ZZ Clinic
11.Not found
12.Return to menu

Enter the information directly if 4 was selected in the previous section.

# FIG. 29

Post-visit questionnaire (1/3)
Intuitive impression
Enter a number from 1 to 10, with 10
being the best and one being the worst.
Objective impression
Enter a number from 1 to 10, with 10
being the best and one being the worst.

Pull down menu

○The waiting time was about ⬜ minutes

○How was the interaction with the receptionist?
Describe
⬜ Enter text

Good
Regular
Bad

○How was the interaction with the nurse?
Describe
⬜ Enter text

Good
Regular
Bad

Back  Next

# FIG. 30

Post-visit questionnaire (2/3)

○How was the care by the doctor?
Describe
⬜ Enter text

Good
Regular
Bad

○How complete was the informed consent?
Describe
⬜ Enter text

Good
Regular
Bad

○How appropriate was the cost?

Appropriate
I don't know
Regular
Not appropriate

○Was disclosure of the receipt requested?

Yes
No

○Other complaints

Back  Next

## FIG. 31

Post-visit questionnaire (3/3)

○Requests or desires regarding the facilities

[                              ]  Enter text

○Requests or desires regarding the services

[                              ]  Enter text

○Response item/advertiser disclosure information such as thanks

[                              ]  Enter text

○May this information be publicized anonymously?  [    ]

Pull down menu
─ No
└ Yes

[Back]  [Send]

## FIG. 32

Pre-purchase/Pre-service questionnaire entry screen

 The search conditions from the advertisement authentication organization are displayed below.Please input the corresponding number.
(These are the most recent 10 items)

| Item | Search date | Type | Search condition |
|------|-------------|------|------------------|
| 1 | ○Month,×Day | Tooth powder | User popularity |
| 2 | ○Month,×Day | Tooth powder | Price |
| 3 | ○Month,×Day | Tooth powder | Accessory services |
| 4 | No search | Other | ･･････････････ |

Go directly to next screen

Subject item  [ 3 ]─── From 1 to 4

Were search results displayed?  [    ]
─ Yes･･･To next screen
           after displaying
           result example 3
└ No････To next screen

## FIG. 33

Pre-purchase/Pre-service questionnaire entry screen

 Use the pull down menu to select a subject product, not yet purchased, from among the prior search on "Tooth powder with accessory services".
 If you are responding about an item that was not found in the previous section,enter the item name directly.
(1)Tooth powder search  [    ]

 This is displayed below according to the results sreen.
 (If not found, directly enter [the item] below.)

[ Li xx aa bb cc ]  This questionnaire relates to [Li XX aabbcc].
                     If this is not correct, reenter (1).  ･ ･ ･ ･

[Back]  [Next]

Pull down menu
1. LiXX    aabbcc
2. SunXX  ddeeff
.
.
.
.
10. BBB  xxxxtooth powder
11. Not found
12. Return to menu

. Enter directly if 4 was
  selected in the
  previous section.

## FIG. 34

Post-purchase questionnaire (1/3)

Intuitive impression
Enter a number from 1 to 10, with 10
being the best and one being the worst.

Objective impression
Enter a number from 1 to 10, with 10
being the best and one being the worst.

Pull down menu

○I'm glad I bought it. ◄───────────────── Good

Regular

Bad

○My impressions on using it were

Enter text

Better than advertised

○Compared to the publicity, the actual product was ◄───── The same as advertised
Describe
Worse than advertised

Enter text
Advertisement was
exerggerated

Back    Next

## FIG. 35

Post-purchase questionnaire (2/3)

Yes
No
○Do you want to keep using it? ◄──────────── I don't know
Fill in the reason below.

Good
Enter text
Regular
○The container and cap were ◄──────── Bad
Describe

Enter text
Better
○Compared to other companies' products, this one is
I don't know
Similar
◄────── Worse

If there is a maker to be compared, list below.

Enter text ──────── Yes

No
○Other complaints

Back    Next

# FIG. 36

Post-purchase questionnaire (3/3)

◯Requests or desires regarding the sales or retailers

[                                    ]  Enter text

◯Requests or desires regarding the other services

[                                    ]  Enter text

◯Response item/advertiser disclosure information such as thanks

[                                    ]  Enter text          Pull down menu

◯May this information be publicized anonymously?  [      ]————————┌— No
                                                                  └— Yes

[Back] [Send]

# FIG. 37

   You can receive the following information from the users of your company's products : Advertiser image information, products/services image information, and user complaints/related information.
   You'll be charged for acquiring this information. The information fee is 10yen per access, using the number of accesses by the users. The fee is a maximum of 100,000 yen per month for one type of information, even if there are more than 10,000 accesses.
   The bill will include the number of accesses per month as well as the information fee.
   To indicate necessary information, clik the white squares below so that they become black.

   ☐Advertisr image information
       You can collect information on what kind of impression they have on reliability of the advertiser and your customer services, classifying the users by age, gender, occupation, and income, Use this information to improve your image with customers and to improve your image effectively with customers who have a bad impression.

   ☐Products/Services image information
       You can collect information on what kind of differences users find between your goods/services and similar goods/services of your competitors, what kind of impressions they have about your advertisement, packaging, if they are satisfied with your specifications, as well as information on usage and purchasing users of your products. Use this information for efficient development of goods and services.

   ☐User complaints/Related information
       By Categorizing complaints from users according to users'age, gender,, occupation and income, you can quickly discover the cause of complaints and feed them back for improving goods and services and also the advertiser image.

[ Back ]  [ Next ]

# FIG. 38

Select user classifications

| Age | Gender | Occupation | |
|---|---|---|---|
| ○10~ | ○Male | ○Company employee | Business type menu |
| ○20~ | ○Female | ○Student | |
| ○30~ | | ○Free-lance professional | |
| ○40~ | | ○Unemployed | |
| ○50~ | | ○Other | |

Back  Next

# FIG. 39

Advertiser image

Pre-purchase

Neither
Bad    Good

Post-purchase

Neither
Bad    Good

# FIG. 40

Breakdown of the reasons for "Good"
○ Good product design    30%
○ Stylish commercials     30%
○ High-quality products   20%
○ High class reputation   10%
○ Other                   10%

Back  Menu

Breakdown of the reasons for "Bad"
○ High-priced products    40%
○ Bad design              30%
○ Dislike the company's
   conservative image      10%
○ Bad commercials          10%
○ Other                    10%

Back  Menu

(a)                              (b)

# FIG. 41

**Product image**

Pre-purchase

Post-purchase

Neither

Good

Bad

Neither

Bad

Good

Back | Menu

# FIG. 42

**User complaints/Related information**

Other

Usability

Packaging
/cap

Comparison
with other
companies

Publicity

EP 1 209 600 A1

FIG. 43

35

# FIG. 44

Question entry blank

* Enter your question below if you did't find it
  in the pull down menu.

* May we publish this question anonymously?

Yes ☑

No ☐

Back | Send

Pull down menu ── Do you perform
                    safety testing?
  ─ Safety ── Are coloring agents used?
            ── What is the shelf life?
            ── What should I do
               if a child eats it?
  ─ Products ── Where is it made?
              ── When will the publicized
                 XX be sold?
              ── Do you have a
                 travel size?
  ─ Not found (Fill in the blank below)

# FIG. 45

Question (No.○○○○○○)

x x x x · · · ·

Answer field

Back | Send

# FIG. 46

Question (No.○○○○○○)

x x x x · · · ·

Answer

x x x x · · · ·

Level of satisfaction [    ] %

Would you like another response? ○Yes ○No
Please explain why you are dissatisfied with the response.

Back | Send

**European Patent Office**

# DECLARATION

Application Number

which under Rule 45 of the European Patent Convention
shall be considered, for the purposes of subsequent
proceedings, as the European search report

EP 01 30 6216

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The subject-matter claimed in claims 1-13 falls under the provisions of Article 52(2) and (3) EPC, such subject-matter relating to a method of doing business as such.

Claims 14-21 relate to commonplace technological features for performing the business method of the method claims. Although these claims do not literally belong to the method category, they essentially claim protection for the same commercial effect as the method claims. With reference to the Guidelines, B-VIII, points 1-6, the Search Division considers that searching such commercial features would serve no useful purpose. This applies to the remaining commonplace technological features of these claims as well.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 7 September 2001 | Falierou, C |

EPO FORM 1504 (P04C37)